(19) Europäisches Patentamt
European Patent Office
Office européen des brevets

(11) EP 0 839 759 B1

(12) EUROPÄISCHE PATENTSCHRIFT

(45) Veröffentlichungstag und Bekanntmachung des Hinweises auf die Patenterteilung:
**03.09.2003 Patentblatt 2003/36**

(21) Anmeldenummer: **97118830.5**

(22) Anmeldetag: **29.10.1997**

(51) Int Cl.7: **C01B 13/14**, C01G 19/02, C09C 1/00, C09C 3/12, B01J 2/30, A61K 6/02, A61K 47/02, B01J 35/08, C08K 9/04, C09D 7/12

(54) **Sphärische Partikel auf der Basis von Metalloxiden enthaltend SnO2, Verfahren zu deren Herstellung und deren Verwendung**

Spherical particles based on metal oxides comprising SnO2, process for their preparation and their use

Particules sphériques à base d'oxydes de métaux comprennant SnO2, procédé pour leur préparation et leur utilisation

(84) Benannte Vertragsstaaten:
**AT BE CH DE DK FR GB IT LI LU NL SE**

(30) Priorität: **29.10.1996 DE 19643781**

(43) Veröffentlichungstag der Anmeldung:
**06.05.1998 Patentblatt 1998/19**

(73) Patentinhaber: **Fraunhofer-Gesellschaft zur Förderung der angewandten Forschung e.V. 80686 München (DE)**

(72) Erfinder:
- **Gellermann, Carsten Dipl.-Chem. 97074 Würzburg (DE)**
- **Wolter, Herbert, Dr. Dipl.-Chem. 97950 Gerchsheim (DE)**
- **Storch, Werner, Dipl.-Phys. 97204 Höchberg (DE)**

(56) Entgegenhaltungen:
**EP-A- 0 173 609**
**DE-A- 4 219 287**
**GB-A- 2 296 915**
**US-A- 4 981 819**
**US-A- 5 562 978**

- **PATENT ABSTRACTS OF JAPAN vol. 011, no. 003 (C-395), 7. Januar 1987 (1987-01-07) & JP 61 183121 A (OKAMURA SEIYU KK;OTHERS: 01), 15. August 1986 (1986-08-15)**
- **PATENT ABSTRACTS OF JAPAN vol. 009, no. 059 (C-270), 15. März 1985 (1985-03-15) & JP 59 193936 A (SUMITOMO ARUMINIUMU SEIREN KK), 2. November 1984 (1984-11-02)**
- **LEE, JONG HEUN ET AL: "Preparation of spherical tin dioxide powders by ultrasonic spray pyrolysi" J. AM. CERAM. SOC. (1993), 76(3), 777-80 , 1993, XP002113419**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft sphärische Partikel auf der Basis von Metalloxiden enthaltend $SnO_2$, Verfahren zu deren Herstellung und deren Verwendung.

Sphärische Partikel auf der Basis von Metalloxiden finden auf den unterschiedlichsten technischen Gebieten breite Anwendung. So z.B. zur Herstellung von Bulkmaterialien, von Beschichtungen, von Folien oder Fasern, zur Herstellung von optischen, elektrooptischen oder optoelektronischen Komponenten, in der Chromatographie, als Füllstoffe oder als Carrier für z.B. pharmakologische Wirkstoffe.

Bei vielen Anwendungsgebieten von sphärischen Partikeln hängt deren Eignung ganz entscheidend von der Partikelgröße, der Partikelgrößenverteilung und der Oberflächenbeschaffenheit ab. Die Oberflächenbeschaffenheit ist z.B. dann von Bedeutung, wenn die Partikel als Füllstoffe Verwendung finden sollen, wenn sie in eine Matrix eingebracht oder wenn sie als Carrier oder in der Chromatographie eingesetzt werden. Man ist deshalb bestrebt, Verfahren zur Herstellung und zur Oberflächenmodifizierung von sphärischen Partikeln zu entwickeln, bei denen die Partikel mit einer engen Partikelgrößenverteilung entstehen, bei denen die Partikelgröße gezielt gesteuert und den Anforderungen des jeweiligen Anwendungsfalles angepaßt werden kann, und bei denen die Oberflächeneigenschaften gezielt modifiziert werden können.

Desweiteren ist man bestrebt, bei Verwendung von sphärischen Partikeln als Füllstoffe, d.h. nach Einarbeitung in eine Matrix, die unterschiedlichsten Kompositionsparameter wie z.B. Elastizitätsmodul, Brechungsindex, Schlagzähigkeit, Röntgenopazität, thermischer Ausdehnungskoeffizient, Permeabilität etc. exakt einstellen zu können. Es besteht ein Bedürfnis nach verbesserten anorganischen Füllstoffen für den Einsatz in polymeren oder polymerisierbaren Systemen, insbesondere in Einbettmassen für optische, elektrooptische und optoelektronische Bauteile.

Aus der DE 42 19 287 A1 sind anorganische Füllstoffe bekannt, die monodisperse, unporöse, kugelförmige Partikel auf der Basis $SiO_2$, $TiO_2$, $ZrO_2$, $Al_2O_3$, $V_2O_5$, $Nb_2O_5$ oder Mischsystemen hiervon darstellen, und die gegebenenfalls eine Oberflächenmodifizierung durch kovalent gebundene organische Gruppen ausweisen.

Nachteilig bei den Füllstoffen nach der DE 42 19 287 A1 ist weiterhin, daß diese Füllstoffe kein befriedigendes Röntgenopazität aufweisen. Für viele Anwendungen sind jedoch ein ausgezeichneter Brechungsindex und eine gute Röntgenopasität wichtig. Ungünstig bei diesen Füllstoffen ist auch, daß maximal 25 % Füllstoff eingebracht werden kann, so daß die Eigenschaften des Charakters im wesentlichen durch die Matrix und nicht durch den Füllstoff bestimmt sind. Daraus resultieren ein relativ hoher Schrumpf und eine thermische Ausdehnung.

Bei der Anwendung als Dentalmaterial ist es günstig, daß die verwendeten Füllstoffe eine gewisse Kontakttoxizität aufweisen, wie dies auch bei Amalgam der Fall ist. Dieser Effekt ist jedoch mit den herkömmlichen Stoffen und Stoffverbindungen nicht erreichbar.

Aufgabe der vorliegenden Erfindung ist es nun, sphärische Partikel auf der Basis von Metalloxiden enthaltend $SnO_2$ bereitzustellen, die über eine enge Partikelgrößenverteilung verfügen und deren Partikelgröße und Oberflächenbeschaffenheit gezielt den Anforderungen des jeweiligen Anwendungsfalles angepaßt sind. Insbesondere ist es Aufgabe der vorliegenden Erfindung, Mischpartikel, d.h. Partikel, die aus mindestens zwei Metalloxiden bestehen, mit den oben genannten Eigenschaften bereitzustellen. Die Mischpartikel sollen mit einer organischen Oberflächenmodifizierung versehen sein. Die sphärischen Partikel sollen außerdem in der Lage sein, bei Verwendung als Füllstoffe, d.h. nach der Einarbeitung in eine Matrix, die unterschiedlichsten Kompositparameter wie z.B. Elastizitätsmodul, Brechungsindex, Schlagzähigkeit, Röntgenopazität, thermischer Ausdehnungskoeffizient, Permeabilität etc. exakt einstellen zu können. Ferner sollen die monodispersen Partikel bei Verwendung als Füllstoffe hohe Feststoffgehalte und eine Reduktion der Schrumpfung ermöglichen. Die oberflächenmodifizierung soll außerdem das Dispergierverhalten in organischen Medien verbessern und die Neigung zur Agglomeration und Sedimentation reduzieren. Außerdem soll der Brechungsindex der Partikel nach Maßgabe der Anwendung an den Brechungsindex der organischen Matrix angepaßt sein.

Ferner ist es Aufgabe der vorliegenden Erfindung, Verfahren zur Herstellung der oben genannten Partikel bereitzustellen. Diese Verfahren sollen einfach, kostengünstig und universell anwendbar sein.

Gelöst wird diese Aufgabe durch sphärische Partikel, die folgende Merkmale aufweisen:

sie besitzen eine Größe zwischen 5 und 10 000 nm bevorzugt 20 bis 2000 nm;

sie enthalten $SnO_2$ und gegebenenfalls eines oder mehrere Oxide der Elemente der 1. bis 5. Hauptgruppe und/ oder der Übergangsmetalle;

die Oberfläche der Partikel ist mit organischen Gruppen modifiziert, wobei die Oberflächenmodifizierung durch partielle oder vollständig hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, erhalten worden ist;

der $SnO_2$-Gehalt der Partikel liegt zwischen 0,1 und 99,9 Gew.-%.

Der Bereich des $SnO_2$-Gehaltes kann günstig bei 10 bis 90 Gew.-% liegen, wenn weitere Oxide vorhanden sind. So kann mindestens ein weiteres Oxid der Elemente der

1. bis 5. Hauptgruppe und/oder der Übergangsmetalle enthalten und so angeordnet werden, daß sich ein zwiebelschalenartiger Aufbau der Partikel ergibt. Eines oder mehrere dieser Oxide können aber auch in einer Matrix aus einem oder mehreren Metalloxid(en) eingebettet sein. Ferner ist auch ein homogener Aufbau möglich.

Solche Verbindungen lassen sich von verschiedenen Monomeren ableiten. Wobei nachfolgend allgemeine Formeln solcher Beispiele genannt werden:

1.

$$R_a\,(Z'\,R'')_b MX_{c-(a+b)} \qquad (1)$$

in der die Reste und Indices folgende Bedeutung haben:

R = Alkyl, Alkenyl, Aryl, Alkylaryl, oder Arylalkyl
R''= Alkylen, oder Alkenylen, wobei diese Reste Sauerstoff-, Schwefelatome und/oder Aminogruppen enthalten können,
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1, 2, 3, 4, 5, 6 oder 7
b = 0, 1, 2, 3, 4, 5, 6 oder 7 mit a+b = 1, 2, 3, 4, 5, 6 oder 7,
c = 1, 2, 3, 4, 5, 6, 7 oder 8 und
M = Elemente der 1. bis 5. Hauptgruppe oder der Übergangsmetalle.

Dabei sind folgende Elemente zu bevorzugen: Silizium, Aluminium, Titan, Ytrium, Zirkon, Strontium, Rubidium, Vanadium und Antimon.

1.1 **Beispiele für mögliche organische Metallverbindungen**

1.1.1 $MeSi(OEt)_3$, n-$BuSi(OCH_3)_3$, $EtSi(OAc)_3$ $H_2N(CH_2)_3Si(OCH_3)_3$, $EtSi(OEt)_2$, $Si(OR)_4$
1.1.2 $Al(OR)_3$, $Al(acac)_3$, $EtAlCl_2$
1.1.3 $Ti(OR)_4$, $TiCl_3$

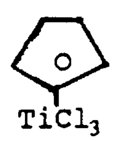

1.1.4 $Sb(OR)_3$, $SbCl_5$, $Ph_3SbCl_2$
1.1.5 $YCl_3$, $Y(OCH_2CH_2OCH_3)_3$
1.1.6 $Zr(OR)_4$,

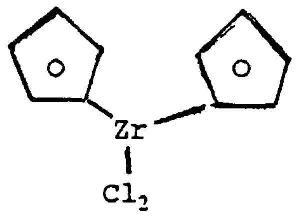

1.1.7 $Sr(acac)_2$, $Sr(OH)_2$
1.1.8 $Rb(OAc)_2$, $Rb(acac)_2$
1.1.9 $VO(O{-}<)_3$, $V(acac)_3$, $VCl_4$
2.

$$R_a\ (Z'\ R'')_b\ SnX_{c-(a+b)} \qquad (II)$$

in der die Reste und Indices folgende Bedeutung haben:

R = Alkyl, Alkenyl, Aryl, Alkylaryl, oder Arylalkyl
R''= Alkylen, oder Alkenylen, wobei diese Reste Sauerstoff-, Schwefelatome und/oder Aminogruppen enthalten können,
X = Wasserstoff, Halogen, Hydroxy, Alkoxy, Acyloxy, Alkylcarbonyl, Alkoxycarbonyl oder $NR'_2$,
mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1, 2, oder 3,
b = 0, 1, 2, oder 3 mit a+b= 1, 2, oder 3,
c = 2, 4.

2.1 **Beispiele für organische Verbindungen mit Sn**

$Sn(OR)_4$, $Sn(OR)_2$, $Bu_2Sn(OMe)_2$, $PhSnCl_3$

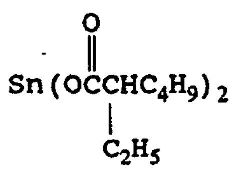 , 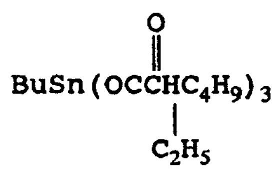

3.

$$R_a\ (Z'\ R'')_b\ SiX_{c-(a+b)} \qquad (III)$$

in der die Reste und Indices folgende Bedeutung haben:

R = Alkyl, Alkenyl, Aryl, Alkylaryl, oder Arylalkyl
R''= Alkylen, oder Alkenylen, wobei diese Reste Sauerstoff-, Schwefelatome und/oder Aminogruppen enthalten können,
X = Wasserstoff, Halogen, Hydroxy, Alkoxy, Acyloxy, Alkylcarbonyl, Alkoxycarbonyl oder $NR'_2$,

mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe
a = 0, 1, 2, oder 3,
b = 0, 1, 2, oder 3 mit a+b= 1, 2, oder 3,
c = 2 oder 4.

4.

$$\{X_aR_bSi[(R'A)_c]_{(4-a-b)}\}_xB \qquad (IV)$$

Dabei können die Reste und Indices gleich oder verschieden sein und folgende Bedeutung haben:

A = O, S, PR'', POR'', NHC(O)O oder NHC(O)NR'',
B = ein geradkettiger oder verzweigter organischer Rest, der sich von einer Verbindung B' mit mindestens einer (für c = 1 und A = NHC(O)O oder NHC(O)NR'') bzw. mindestens zwei C = C-Doppelbindungen und 5 bis 50 Kohlenstoff-Atomen ableitet,
R = Alkyl, Alkenyl, Aryl, Alkylaryl oder Arylalkyl,
R' = Alkylen, Arylen oder Alkylenarylen,
R''= Wasserstoff, Alkyl oder Aryl,
X = Wasserstoff, Halogen, Hydroxy, Alkoxy, Acyloxy, Alkylcarbonyl, Alkoxycarbonyl oder $NR''_2$,
a = 1, 2 oder 3,
b = 0, 1 oder 2, c = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR'' steht,

wobei die Alkyl- bzw. Alkenyl-Reste gegebenenfalls substituierte geradkettige, verzweigte oder cyclische Reste mit 1 bis 20 Kohlenstoff-Atomen sind und Sauerstoff-, Schwefel-Atome und/oder Amino-Gruppen enthalten können, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylenund Alkylenaryl-Reste von den oben definierten Alkyl- und Aryl-Resten ableiten.

5.

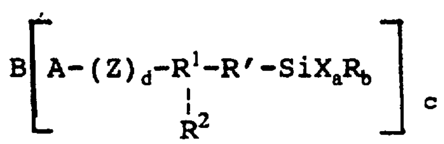

(V)

wobei die Reste und Indices gleich oder verschieden und folgende Bedeutung haben können:

B = ein geradkettiger oder verzweigter organischer Rest mit mindestens einer C = C-Doppelbindung und 4 bis 50 Kohlenstoff-Atomen;
X = Wasserstoff, Halogen, Hydroxy, Alkoxy, Acyloxy, Alkylcarbonyl, Alkoxycarbonyl oder $NR''_2$;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoff-Atomen, wobei diese Reste Sauerstoff-, Schwefel-Atome und/oder Aminogruppen enthalten können;
R''= Wasserstoff, Alkyl oder Aryl;
A = O, S oder NH für

d = 1 und
Z = CO und
$R^1$= gegebenenfalls Sauerstoff-, Schwefel-Atome und/oder Amino-Gruppen enthaltendes Alkylen, Arylen

oder Alkylenarylen mit jeweils 1 bis 10 Kohlenstoff-Atomen und
$R^2$= H oder COOH oder

A = O, S, NH oder COO für

d = 0 oder 1 und
Z = CHR, mit R = H, Alkyl, Aryl oder Alkylaryl, und
$R^1$= gegebenenfalls Sauerstoff-, Schwefel-Atome und/oder Amino-Gruppen enthaltendes Alkylen, Arylen oder Alkylenarylen mit jeweils 1 bis 10 Kohlenstoff-Atomen und
$R^2$= OH; oder

A = S für

d = 1 und
Z = CO und
$R^1$= N und
$R^2$= H;

a = 1, 2 oder 3;
b = 0, 1 oder 2, mit a+b = 3;
c = 1, 2, 3 oder 4.

6.

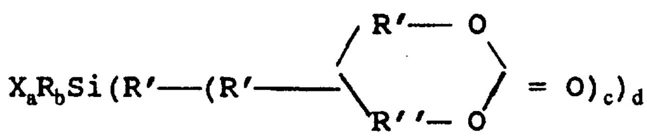

(VI)

wobei hier die Reste und Indices gleich oder verschieden und nachfolgende Bedeutung haben können:

X = Wasserstoff, Halogen, Hydroxy, Alkoxy, Acyloxy, Alkylcarbonyl, Alkoxycarbonyl oder $NR^2_2$;
R = Alkyl, Alkenyl, Aryl, Alkylaryl oder Arylalkyl;
R'= Alkylen, Arylen, Arylenalkylen oder Alkylenarylen mit jeweils 0 bis 10 Kohlenstoff-Atomen, wobei diese Reste Sauerstoff-, Schwefel-Atome und/oder Amino-Gruppen enthalten können;
R"= Alkylen, Arylen , Arylenalkylen oder Alkylenarylen und jeweils 1 bis 10 c-Atomen, wobei diese Reste Sauerstoff-, Schwefelatome und/oder Amino-Gruppen enthalen können.
$R^2$= Wasserstoff, Alkyl oder Aryl;
a = 1, 2 oder 3;
b = 0, 1 oder 2, mit a+b = 1, 2 oder 3;
c = 1, 2, 3, 4, 5 oder 6;
d = 4-a-b.

7.

$$Y_nSiX_mR_{4-(n+m)} \quad \text{(VIII)}$$

wobei die Reste gleich oder verschieden sein können und nachfolgende Bedeutung haben:

R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
Y = ein Substituent, der einen substituierten oder unsubstituierten 1,4,6-Trioxaspiro-[4,4]-nonan-Rest enthält,

n = 1, 2 oder 3,
m = 1, 2 oder 3, mit n + m ≤ 4.

8.

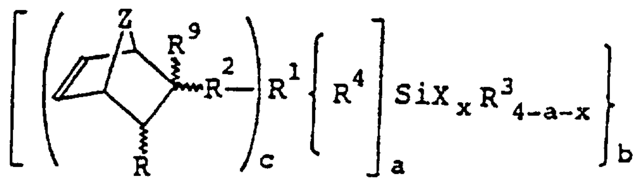

(VIII)

in der die Reste und Indices gleich oder verschieden sein können und folgende Bedeutung haben:

R = Wasserstoff, $R^2$-$R^1$-$R^4$-$SiX_xR^3_{3-x}$, Carboxyl-, Alkyl, Alkenyl, Aryl, Alkylaryl oder Arylalkyl mit jeweils 1 bis 15 Kohlenwasserstoff-Atomen, wobei diese Reste Sauerstoff- oder Schwefel-Atome, Ester-, Carbonyl-, Amid- oder Aminogruppen enthalten können;
$R^1$= Alkylen, Arylen, Arylenalkylen oder Alkylarylen mit jeweils 0 bis 15 Kohlenstoff-Atomen, wobei diese Reste Sauerstoff- oder Schwefel-Atome, Ester-,Carbonyl-, Amid-oder Aminogruppen enthalten können;
$R^2$= Alkylen, Arylen, Arylenalkylen oder Alkylarylen mit jeweils 0 bis 15 Kohlenstoff-Atomen, wobei diese Reste Sauerstoff- oder Schwefel-Atome, Ester-, Carbonyl-, Amid-oder Aminogruppen enthalten können;
$R^3$= Alkyl, Alkenyl, Aryl, Alkylaryl oder Arylalkyl mit jeweils 1 bis 15 Kohlenstoff-Atomen, wobei diese Reste Sauerstoff- oder Schwefel-Atome, Ester-, Carbonyl-, Amid-oder Aminogruppen enthalten können;
$R^4$= $-(-CHR^6-CHR^6)_n-$, mit n = o oder 1, $-CHR^6-CHR^6-S-R^5-$, $-CO-S-R^5-$, $-CHR^6-CHR^6-NR^6-R^5-$, $-Y-CS-NH-R^6-$, $-S-R^5$, $-Y-CO-NH-R^5-$, $-CO-O-R^5-$, $-Y-CO-C_2H_3(COOH)-R^5-$, $-Y-CO-C_2H_3(OH)-R^5-$ oder $-CO-NR^6-R^5-$;
$R^5$= Alkylen, Arylen, Arylenalkylen oder Alkylarylen mit jeweils 1 bis 15 Kohlenstoff-Atomen, wobei diese Reste Sauerstoff- oder Schwefel-Atome, Ester-, Carbonyl-, Amid-oder Aminogruppen enthalten können;
$R^6$= Wasserstoff, Alkyl oder Aryl mit 1 bis 10 Kohlenstoff-Atomen;
$R^9$= Wasserstoff, Alkyl, Alkenyl, Aryl, Alkylaryl oder Arylalkyl mit jeweils 1 bis 15 Kohlenstoff-Atomen, wobei diese Reste Sauerstoff- oder Schwefel-Atome, Ester-, Carbonyl-, Amid- oder Aminogruppen enthalten können;
X = Wasserstoff, Halogen, Hydroxy, Alkoxy, Acyloxy, Alkylcarbonyl, Alkoxycarbonyl oder $NR''_2$,
mit R'' = Wasserstoff, Alkyl oder Aryl;
Y = -O-, -S- oder $-NR^6-$;
Z = -O- oder $-(CHR^6)_m-$, mit m = 1 oder 2;
a = 1, 2 oder 3, mit b = 1 für a = 2 oder 3;
b = 1, 2 oder 3, mit a = 1 für b = 2 oder 3;
c = 1 bis 6;
x = 1, oder 3;
a+x= 2, 3 oder 4.

Bei den Beispielen 3 bis 8 ermöglichen die verwendeten Si-Verbindungen eine große Variabilität bei der gezielten Einflußnahme auf die Eigenschaften. Sie können neben dem Anteil an Feststoffen die mechanischen Eigenschaften, wie z.B. die Schlagzähigkeit des Komposits beeinflussen. Die funktionellen Gruppen (z.B. polymerisierbare Doppelbindungen), die in relativ großer Zahl vorhanden sind, sichern eine gute Einbindung des Füllstoffes in das Harz bzw. Komposit.

Beispielsweise kann mit einer langkettigen Methylenkette zwischen dem Si-Teil und einer funktionellen Gruppe (C=C-Doppelbindung) eine flexiblere Einbindung und dadurch ein verringerter E-Modul sowie ein größerer thermischer Ausdehnungskoeffizient eingestellt werden, als dies mit einer kürzeren Kette zwischen Si-Teil und funktioneller Gruppe möglich ist. Es sind aber auch andere Modifizierungen der Eigenschaften möglich, die mit den aus dem Stand

der Technik bekannten Reagenzien, die nur eine funktionelle Gruppe aufweisen, nicht in dem Maße realisierbar sind. So bewirkt beispielsweise eine vergrößerte Anzahl an (Meth)acrylat-Gruppen im Gegensatz zu wenigen (Meth)-acrylat-Gruppen einen größeren Eleastizitätsmodul (E-Modul) und einen kleineren thermischen Ausdehnungskoeffizienten. Mit einer größeren Anzahl von Alkoxygruppen ist ebenfalls ein größerer Elastizitätsmodul und ein kleinerer thermischer Ausdehnungskoeffizient erreichbar.

Die unter den Beispielen 1 und 2 genannten Monomere, die sich nach den allgemeinen Formeln I und II ableiten, können auch zu einer gewünschten Modifizierung im Inneren der erfindungsgemäßen sphärischen Partikel verwendet werden, wobei hier auch a+b 0 sein kann. Auch können zur Modifizierung im Inneren Wasserglaslosungen verwendet werden.

Die erfindungsgemäßen sphärischen Partikel können mittels einer Eintopfsynthese auch in situ erhalten werden, gegebenenfalls könnten kommerziell erhältliche kolloidale Sole in einer Dispersion in situ mittels einer Mehrschritt-Eintopfsynthese einer organischen Oberflächenmodifizierung unterzogen werden, wie sie nachfolgend noch näher in verschiedenen Varianten beschrieben wird.

Die modifizierten Partikel können dann in verschiedene Polymer-Matrizes eingearbeitet werden, um bestimmte Eigenschaften, wie z.B. den Brechungsindex, die Röntgenopazität u.a., in gewünschter Form einzustellen. Ganz besonders sind sogenannte mit dem Markennamen OROMOCER bekannte Matrizes geeignet.

Die erfindungsgemäßen Partikel können dabei einen zwiebelschalenartigen Aufbau aufweisen, bei dem neben dem $SnO_2$ mindestens ein weiteres Oxid der Elemente der 1. bis 5. Hauptgruppe und/oder der Übergangsmetalle eine zusätzliche Schale bildet. Dabei sind eine oder mehrere schalenförmigen Oxidschichten um einen zentral angeordneten Kern, der ebenfalls aus einem Oxid besteht, ausgebildet. Ein solcher Aufbau läßt sich beispielsweise auf der Basis eines Sol-Gel-Prozesses erzeugen.

Die Herstellung kann auch über ein Emulsionsverfahren erfolgen. Dabei wird mindestens Sn als ein ausfällbares Oxid(hydrat) in gelöster Form oder in Form eines Sols in wäßriger Phase und unter Verwendung eines Emulgators in einer organischen Flüssigkeit emulgiert und die Ausfällung des $SnO_2$-Hydrates oder anderer Oxid(hydrate) in den emulgierten Wassertröpfchen durch Lösung mindestens einer aus quaternären Ammonium-, Phosphonium- und anderen Oniumverbindungen sowie Salzen langkettiger organischer Säuren ausgewählter Verbindungen, vor, während oder nach der Bildung der Emulsion bewirkt wird, wobei die betreffende Verbindung entweder bereits in der OH- bzw. H-Form vorliegt oder in situ erzeugt wird, worauf das Wasser destillativ entfernt wird.

Als Emulgator kann ein nichtionischer Emulgator verwendet werden und die die Ausfällung bewirkende Verbindung Hydroxidionen in die wässrige Phase einschleust, wobei dafür bevorzugt ein quaternäres Ammoniumsalz, z. B. Tetra(ar)alkylammoniumhalogenid eingesetzt werden kann.

Mit dem Emulsionsverfahren können kleine Partikel in größere Partikel, deren Matrix aus demselben bzw. aus einem anderen Oxid besteht, eingebettet werden, um so einen Kompositaufbau der Partikel zu erhalten. Ein solcher Aufbau kann auch erreicht werden, wenn kleine Partikel auf große aufwachsen.

Partikel mit einer homogenen Verteilung verschiedener Oxide in dem jeweiligen Partikel können durch gemeinsame Hydrolyse und Kondensation mit verschiedenen Metalloxid-Precursoren (z.B. Metallalkoholate, Alkylcarbonyle) erhalten werden.

Die bereits erwähnte Oberflächenmodifizierung der erfindungsgemäßen Partikel kann einmal über einen Sol-Gel-Prozeß in situ oder auch im Nachgang mit verschiedenen Metall-Verbindungen wie z.B. speziellen Silanen, die nach einer Hydrolyse und Kondensation an der Oberfläche der Partikel aufkondensiert werden, erreicht werden. Im Ergebnis dieser Modifizierung sind die ausgangs verwendeten Partikel gewachsen.

Bei der Oberflächenmodifizierung der sphärischen Partikel sorgt die Variation der funktionellen Gruppe im organischen Teil dafür, daß eine günstige Anpassung an die jeweils verwendete Polymermatrix, in die eine Einbettung erfolgen soll, erreicht wird. Durch Veränderung der organischen Kettenlänge zwischen der funktionellen Gruppe und dem anorganischen Molekülteil ist eine Anpassung der Einbindungsflexibilität in die Matrix, in die die Partikel eingearbeitet werden sollen, beispielsweise unter Berücksichtigung des Elastizitätsmoduls, der Spannungsreduktion und u. a. möglich. Durch Veränderung der Anzahl der funktionellen Gruppen je Reagenzmolekül kann die Einbindungsstärke in die Matrix, in die die Partikel eingearbeitet werden, variiert werden. Eine Variation der hydrolysierbaren Gruppen kann dazu führen, daß der Anbindungsgrad, d.h. die chemische Anbindung der Modifizierungsreagenzien an die jeweiligen Partikel einstellbar wird.

Für die Herstellung stehen drei grundsätzliche Verfahrensvarianten zur Verfügung. Eine erste beruht darauf, daß man auf sphärische Metalloxidpartikel einen oder mehrere Schalen aus Metalloxiden und/oder aus Metalloxid-Gemischen aufbringt, wobei als Metalloxid zumindest teilweise $SnO_2$ verwendet wird, jeweils durch hydrolytische Kondensation einer oder mehrerer hydrolytisch kondensierbarer Verbindungen der Elemente Si, B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, und daß man die resultierenden Partikel einer Oberflächenmodifizierung unterwirft, indem man eine oder mehrere organisch modifizierte und hydrolytisch kondensierbare Verbindungen der Elemente Sn, Si,

B, Al, P, Pb, der Übergangsmetalle, der Lanthaniden und der Actiniden, und/oder von den oben genannten Verbindungen abgeleitete Vorkondensate, gegebenenfalls in Anwesenheit eines Katalysators und/oder eines Lösungsmittels durch Einwirken von Wasser oder Feuchtigkeit auf die Partikeloberfläche aufkondensiert.

Eine zweite Variante beruht darauf, daß man eine Mischung aus einer hydrolytisch kondensierbaren Sn-Verbindung und mindestens einer weiteren hydrolytisch kondensierbaren Verbindung der Elemente Si, B, Al, P, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit einer hydrolytischen Kondensation unterwirft, und daß man die resultierenden Partikel einer Oberflächenmodifizierung unterwirft, indem man eine oder mehrere organisch modifizierte und hydrolytisch kondensierbare Verbindungen der Elemente Sn, Si, B, Al, P, Pb, der Übergangsmetall, der Lanthaniden und der Actiniden, und/oder von den oben genannten Verbindungen abgeleitete Vorkondensate, gegebenenfalls in Anwesenheit eines Katalysators und/oder eines Lösungsmittels durch Einwirken von Wasser oder Feuchtigkeit auf die Partikeloberfläche aufkondensiert.

Letztlich beruht eine dritte Variante auf Basis eines Emulsionsverfahrens darauf, daß mindestens Sn als ein ausfällbares Oxid(hydrat) in gelöster Form oder in Form eines Sols in wässriger Phase enthalten ist und unter Verwendung eines Emulgators in einer organischen Flüssigkeit emulgiert und die Ausfällung des $SnO_2$-Hydrates oder anderer Oxid(hydrate) in den emulgierten Wassertröpfchen durch Lösung mindestens einer aus quaternären Ammonium-, Phosphonium- und anderen Oniumverbindungen sowie Salzen langkettiger organischer Säuren ausgewählter Verbindungen, vor, während oder nach der Bildung der Emulsion bewirkt wird, wobei die betreffende Verbindung entweder bereits in der OH- bzw. H-Form vorliegt oder in situ erzeugt wird, worauf das Wasser destillativ entfernt wird, und daß man die resultierenden Partikel einer Oberflächenmodifizierung unterwirft, indem man eine oder mehrere organisch modifizierte und hydrolytisch kondensierbare Verbindungen der Elemente Sn, Si, B, Al, P, Pb, der Übergangsmetalle, der Lanthaniden und der Actiniden, und/oder von den oben genannten Verbindungen abgeleitete Vorkondensate, gegebenenfalls in Anwesenheit eines Katalysators und/oder eines Lösungsmittels durch Einwirken von Wasser oder Feuchtigkeit auf die Partikeloberfläche aufkondensiert.

Die entsprechend der Erfindung ausgebildeten und modifizierten Partikel können günstig für Bulkmaterialien, Beschichtungen, Folien, Fasern, elektrophoretische Abscheidungen, in der Chromatografie, als Carrier für pharmakologisch wirksame Substanzen, und in den verschiedensten anderen Bereichen eingesetzt werden. Ein besonders günstiger Einsatzzweck ist die Verwendung als Füllstoff, insbesondere im Dentalbereich. Ein vorteilhafter Einsatz der Partikel mit modifizierter Oberfläche, die in eine Matrix eingearbeitet sind, können entsprechende Parameter, wie z.B. der Elastizitätsmodul, der Brechungsindex, die Schlagzähigkeit, die Röntgenopazität, der thermische Ausdehnungskoeffizient, die Permeabilität, exakt eingestellt werden und dem jeweiligen Einsatzzweck entsprechend angepaßt sein.

Wie die meisten Elemente mit hohem Atomgewicht, die ebenfalls Röntgenstrahlen stark absorbieren, hat auch Zinn diese Eigenschaft. Da die Röntgenopazität auch wellenlängenabhängig ist, kann Zinn aufgrund seines hohen spezifischen Massenabsorptionskoeffizienten im Dentalbereich günstig eingesetzt werden. Die verwendeten Röntgengeräte mit Beschleunigungsspannung von 60 bis 80 kV erzeugen ein Wellenlängenspektrum zwischen 0,3 und 0,4 * $10^{-10}$ m.

Nachfolgende Tabelle zeigt Werte für spezifische Massenabsorptionskoeffizienten mehrerer Elemente bei den interessierenden Wellenlängen, wobei die Werte für Zinn sich von den meisten anderen deutlich abheben und daher eine Verwendung als Dentalmasse besonders interessant ist. Mit Kenntnis der spezifischen Massenabsorption und dem Massenanteil im Festkörper kann die Röntgenabsorption berechnet und je nach Bedarf eingestellt oder berücksichtigt werden.

| Element | Wellenlänge $\lambda$ 0,3 * $10^{-10}$ | Wellenlänge $\lambda$ 0,4 *$10^{-10}$ |
|---|---|---|
| Sn | 19,0 | 39,5 |
| Si | 0,66 | 1,32 |
| Ti | 2,1 | 4,69 |
| Zr | 10,9 | 24,0 |
| Al | 0,55 | 1,08 |
| V | 2,38 | 5,34 |
| Nb | 11,7 | 25,5 |
| Y | 10,2 | 22,5 |
| Sr | 9,5 | 21,0 |
| Rb | 8,84 | 19,6 |
| Sb | 19,8 | 40,8 |

Die verschiedenen Eigenschaften von Zinn und Zinnverbindungen sind sehr unterschiedlich. Dies trifft auch auf die Toxizität zu. So ist $SnO_2$ chemisch resistent und unbedenklich. Es kann daher für viele Anwendungsfälle, wie z.B. als Farbpigment, Flammschutzmittel, Elektrodenmaterial, Isolationsmittel eingesetzt werden.

Dagegen sind organische Zinnverbindungen gegenüber thermischen und chemischen Einflüssen nicht so stabil, haben aber z.B. fungizide und bakterizide Wirkungen. Diese Verbindungen liegen nach der Hydrolyse und Kondensation in eingebundener Form in den Partikeln vor. Sie sind also chemisch an die Partikel gebunden und können aus dem Verbund im Inneren nicht mehr herausdiffundieren. Die vorher gegebenenfalls vorhandenen bakteriziden und fungiziden Eigenschaften sind dann nicht mehr gegeben, und ein Einsatz als Dentalfüllstoff ist ohne weiteres möglich.

Bei Beschichtungen und insbesondere bei Dentalmaterialien kann aber ein gewisses Maß von Kontakttoxizität wünschenswert sein, wobei insbesondere für Ränder und Spalten diese Eigenschaft von Interesse ist. Dabei sind solche Elemente bzw. Verbindungen lediglich bei direktem Kontakt toxisch, und es können Bakterien bei Berührung abgetötet werden. Diese Eigenschaft haben aber neben Amalgam auch organische Sn-Verbindungen.

Die Kontakttoxizität ist aber nur bei Partikeln vorhanden, die die Verbindung an der Oberfläche aufweist, da eine Diffusion aus dem Inneren aufgrund der festen Einbindung nicht auftritt. Mit den verschiedenen Verfahren können Partikel zur Verfügung gestellt werden, bei denen die Kontakttoxizität gezielt einstellbar ist.

So ist die Kontakttoxizität bei einem zwiebelschalenartigen Aufbau gegeben, wenn im äußeren Schalenbereich Sn vorhanden ist. Werden Partikel mit homogener Verteilung oder mit Einbettung in eine Matrix erzeugt, führt dies bei einem Sn-Gehalt ebenfalls zu einem gewissen Maß an Kontakttoxizität.

Durch die erreichten hohen Feststoffgehalte kann die Schrumpfung mit Hilfe von Bi-, Tri- und polymodalen Partikelgrößenverteilungen reduziert werden. Die erfindungsgemäßen Partikel können darüber hinaus aber auch für die verschiedensten optischen, elektrooptischen und optoelektronischen Anwendungen eingesetzt werden.

Die Erfindung wird nachfolgend durch Synthesebeispiele näher erläutert.

**Synthesebeispiele**

Beispiel 1

Kommerziell erhältliche $SnO_2$-Partikel in Dispersion (Durchschnittsgröße ca. 15 nm) wurden mit Hilfe von destilliertem Wasser verdünnt, gefiltert und mit Hilfe von Methanol auf eine Konzentration 0.1 Gew.-% $SnO_2$ eingestellt. Unter Rühren wurden zu dem auf 40 ± 0.1 °C temperierten Sol 124 mg 3-Methacryloxypropyltrimethoxysilan pro g $SnO_2$ hinzugegeben und 1 h gerührt, wobei gegebenenfalls ein Katalysator einsetzbar ist.
TEM: ca. 15 nm (Partikeldurchmesser nach der Modifizierung),
DRIFT-Spektroskopie: $\nu_{(c\text{-}o)}$ = 1720 bis 1725 $cm^{-1}$.

Beispiel 2

Kommerziell erhältliche $SnO_2$-Partikel in Dispersion (Durchschnittsgröße ca. 15 nm) wurden mit Hilfe von destilliertem Wasser verdünnt, gefiltert und auf eine Konzentration 1.0 Gew.-% $SnO_2$ eingestellt. Unter Rühren wurden zu dem auf 40 ± 0.1 °C temperierten Sol 111 mg 3-Aminopropyltriethoxysilan pro g $SnO_2$ hinzugegeben, wobei gegebenenfalls ein Katalysator einsetzbar ist. Das entstehende Gel wurde mittels Zugabe von Essigsäure und Erhitzen von 95 °C für 2h wieder in eine kolloidale Lösung überführt.
TEM: ca. 15 nm (Partikeldurchmesser nach der Modifizierung),
Zeta-Potential-Messungen: Verschiebung des isoelektrischen Punktes von anfangs $pH_{IEP}$ = 3.6 ($SnO_2$) zu $pH_{IEP} \geq 8$ nach Oberflächenmodifizierung.

Beispiel 3

Es wurde eine kolloidale Lösung hergestellt aus 1.50 g (10.0 mmol) kommerziell erhältlichem $SnO_2$ (Partikelgröße ca. 15 nm), 3120 g (67.8 mol) Ethanol, 67.0 g (3.9 mol) Ammoniak und 675 g (37.5 mol) destilliertem Wasser. Nach Filtration wurden unter intensivem Rühren zu dem auf 40 ± 0.1 °C temperierten Sol innerhalb von 24 h 50.0 g (0.24 mol) Tetraethoxysilan hinzugegeben. Zu dem so enthaltenen Mischoxid-Sol gab man auf einmal 5.6 g (15.0 mmol) des Alkoxysilans 1.

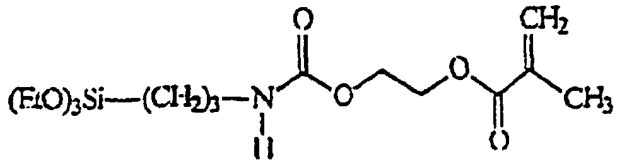

1

TEM: ca. 44 nm (Partikeldurchmesser nach der Modifizierung),
DRIFT-Spektroskopie $\nu_{(c=o)}$ = 1720 bis 1725 $cm^{-1}$.
Die Röntgenfluoreszenzanlyse bestätigt, daß das Verhältnis von Si zu Sn mit dem entsprechenden Verhältnis in den Ausgangsverbindungen übereinstimmt.

Beispiel 4

Es wurde eine kolloidale Lösung hergestellt aus 1.50 g ( 10.0 mmol) kommerziell erhältlichem $SnO_2$, (Partikelgröße ca. 15 nm), 3120 g (67.8 mol) Ethanol, 67.0 g (3.9 mol) Ammoniak und 675 g (37.5 mol) destilliertem Wasser. Nach Filtration wurden unter intensiven Rühren zu dem auf 40 ± 0.1 °C temperierten Sol innerhalb von 48 h 100.0 g (0.24 mol) Tetraethoxysilan hinzugegeben. Zu dem so enthaltenen Mischoxid-Sol gab man auf einmal 4.8 g (10.0 mmol) des Alkoxysilans 2.

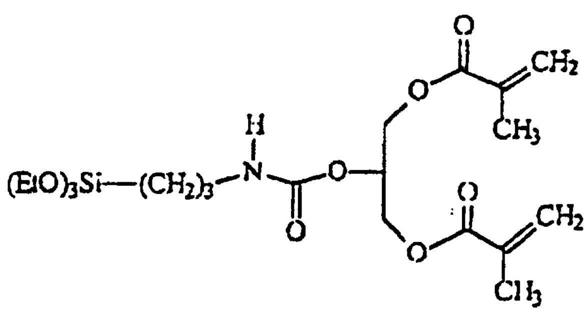

2

TEM: ca. 53 nm (Partikeldurchmesser nach der Modifizierung),
DRIFT-Spektroskopie: $\nu_{(c=o)}$ = 1720 bis 1725 $cm^{-1}$.
Die Röntgenfluoreszenzanalyse bestätigt, daß das Verhältnis von Si zu Sn mit dem entsprechenden Verhältnis in den Ausgangsverbindungen übereinstimmt.

Beispiel 5

Es wurde eine kolloidale Lösung hergestellt aus 1.50 g kommerziell erhältlichen Sb-Sn-O Mischoxid-Partikeln (Partikelgröße ca. 15 nm), 3120 g (67.8 mol) Ethanol, 67.0 g (3.9 mol) Ammoniak und 675 g (37.5 mol) destilliertem Wasser. Nach Filtration wurden unter intensivem Rühren zu dem auf 40 ± 0.1 °C temperierten Sol innerhalb von 24 h 50.0 g (0.24 mol) Tetraethoxysilan hinzugegeben. Zu dem so enthaltenen Mischoxid-Sol gab man auf einmal 5.6 g (15.0 mmol) des Alkoxysilans 1.

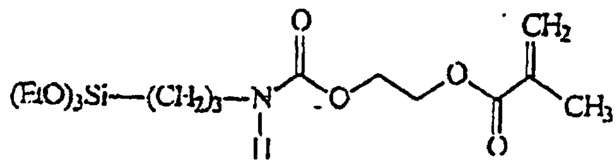

1

TEM: ca. 44 nm (Partikeldurchmesser nach der Modifizierung),
DRIFT-Spektroskopie: $\nu_{(c=o)}$ = 1720 bis 1725 $cm^{-1}$
Die Röntgenfluoreszenzanalyse bestätigt, daß das Verhältnis von Si zu Sn und Sb mit dem entsprechenden Verhältnis in den Ausgangsverbindungen übereinstimmt.

Beispiel 6

16.1 g (50.0 mmol) $ZrOCl_2 \cdot 8\ H_2O$ und 17.5 g (50.0 mmol) $SnCl_4 \cdot 5\ H_2O$ wurden in 110 ml Wasser gelöst und mit 3.4 g (13.7 mmol) 3-Methacryloxypropyltrimethoxysilan in 375 ml Petrolether (Siedebereich 50 bis 70 °C) sowie 1.5 g Emulgator versetzt. Die Emulsion wurde anschließend mittels eines Ultraturrax hergestellt. 1 Mol% Didodecyldimethylammoniumbromid, bezogen auf die Menge auszutauschender Anionen, wurden in Octanol mit einer Konzentration von 1 g/5 ml gelöst und zur Emulsion gegeben. Der Ionenaustausch erfolgte mittels eines starken basischen Ionenaustauschers (Dowex). Kontinuierlich wurde der Austausch anhand von Indikatorstäbchen kontrolliert.
10 Vol % Butanol, bezogen auf die Gesamtmenge an Wasser, wurden zur Emulsion gegeben. Nach azeotroper Destillation wurden die Partikel isoliert, in Petrolether redispergiert und getrocknet.
Die Röntgenfluoreszenzanalyse bestätigt, daß das Verhältnis von Zr zu Sn in den mittels TEM nachgewiesenen kugelförmigen Partikeln mit dem entsprechenden Verhältnis in den Ausgangsverbindungen übereinstimmt.

## Patentansprüche

1. Sphärische Partikel, hergestellt durch einen Sol-Gel-Prozeß oder hydrolytisch, mit folgenden Merkmalen:

   - sie weisen eine Größe zwischen 5 und 10 000 nm auf;
   - sie enthalten $SnO_2$ oder $SnO_2$ und mindestens ein weiteres Oxid der Elemente der 1 bis 5 Hauptgruppen und/oder der Übergangsmetalle, wobei die Oxide auch organische Gruppen aufweisen können;
   - die Oberfläche der Partikel ist mit organischen Gruppen modifiziert, wobei die Oberflächenmodifizierung erhalten worden ist durch partielle oder vollständig hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit;
   - der $SnO_2$-Gehalt der Partikel liegt zwischen 0,1 und 99,9 Gew.-%;
   - sie weisen einen zwiebelschalenartigen Aufbau oder eine homogene Verteilung oder einen Partikel in Matrix-Aufbau der Metalloxide auf.

2. Sphärische Partikel nach Anspruch 1,**dadurch gekennzeichnet, daß** der $SnO_2$-Gehalt der Partikel im Bereich zwischen 10 bis 90 Gew.-% liegt.

3. Sphärische Partikel nach Anspruch 1 oder 2, **dadurch gekennzeichnet, daß** sich eine oder mehrere der hydrotisch kondensierten Metallverbindungen von Monomeren der allgemeinen Formel 1 ableiten.

$$R_a(Z'R'')_bMX_{c-(a+b)} \qquad (I)$$

in der die Reste und Indices folgende Bedeutung haben:

R = Alkyl, Alkenyl, Aryl, Alkylaryl, oder Arylalkyl;
R" = Alkylen, oder Alkenylen, wobei diese Reste Sauerstoff-, Schwefelatome und/oder Aminogruppen enthalten können;
X = Wasserstoff, Halogen, Hydroxy, Alkoxy, Alcyloxy, Alkylcarbonyl, Alkoxycarbonyl oder $NR'_2$ mit R'= Wasserstoff, Alkyl oder Aryl;
Z' =Halogen oder eine gegebenenfalls substituierte Amino-, Amid-, Aldehyd-, Alkylcarbonyl-, Carboxy-Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1, 2, 3, 4, 5, 6 oder 7
b = 0, 1, 2, 3, 4, 5, 6 oder 7 mit a+b= 1, 2, 3, 4, 5, 6 oder 7,
c = 1, 2, 3, 4, 5, 6, 7 oder 8 und
M = Elemente der 1. bis 5. Hauptgruppe oder der Übergangsmetalle.

**4.** Spärische Partikel nach Anspruch 1 bis 3, **dadurch gekennzeichnet, daß** sich eine oder mehrere der hydrolytisch kondensierten Sn-Verbindungen von Monomeren der allgemeinen Formel II ableiten,

$$R_a(Z'R")_bSnX_{c-(a+b)} \quad (II)$$

in der die Reste und Indices folgende Bedeutung haben:

R = Alkyl, Alkenyl, Aryl, Alkylaryl, oder Arylalkyl;
R" = Alkylen, oder Alkenylen, wobei diese Reste Sauerstoff-, Schwefelatome und/oder Aminogruppen enthalten können;
X = Wasserstoff, Halogen, Hydroxy, Alkoxy, Acyloxy, Alkylcarbonyl, Alkoxycarbonyl oder $NR'_2$ mit R'= Wasserstoff, Alkyl oder Aryl;
Z' =Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1 oder 3,
b = 0, 1, 2 oder 3 mit a+b= 1, 2 oder 3,
c = 2,4

**5.** Sphärische Partikel nach mindestens einem der Ansprüche 1 bis 3, **dadurch gekennzeichnet, daß** sich eine oder mehrere der hydrolytisch kondensierten Si-Verbindungen der Oberflächenmodifizierung von Monomeren der allgemeinen Formel III ableiten,

$$R_a(Z'R")_bSiX_{c-(a+b)} \quad (III)$$

in der die Reste und Indices folgende Bedeutung haben:

R = Alkyl, Alkenyl, Aryl, Alkylaryl, oder Arylalkyl;
R" = Alkylen, oder Alkenylen, wobei diese Reste Sauerstoff-, Schwefelatome und/oder Aminogruppen enthalten können;
X = Wasserstoff, Halogen, Hydroxy, Alkoxy, Acyloxy, Alkylcarbonyl, Alkoxycarbonyl oder $NR'_2$ mit R'= Wasserstoff, Alkyl oder Aryl;
Z' =Halogen oder eine gegebenenfalls substituierte Amino-, Amid-, Aldehyd, Alkylcarbonyl-, Carboxy-, Mercapto-, Cyano-, Alkoxy-, Alkoxycarbonyl-, Sulfonsäure-, Phosphorsäure-, Acryioxy-, Methacryloxy-, Epoxy- oder Vinylgruppe,
a = 0, 1 oder 3,
b = 0, 1, 2 oder 3 mit a+b = 1, 2 oder 3,
c = 2 oder 4.

**6.** Sphärische Partikel nach mindestens einem der Ansprüche 1 bis 3, **dadurch gekennzeichnet, daß** sich eine oder

mehrere der hydrolytisch kondensierten Si-Verbindungen der Oberflächenmodifizierung von Monomeren der allgemeinen Formel IV ableiten,

$$\{X_aR_bSi[(R'A)_c]_{(4-a-b)}\}_xB \quad \text{(IV)}$$

in der die Reste und Indices gleich oder verschieden sind und folgende Bedeutung haben:

A = O,S, PR", NHC(O)O oder NHC(O)NR",
B = ein geradkettiger oder verzweigter organischer Rest, der sich von einer Verbindung B' mit mindestens einer (für c =1 und A = NHC(O) oder NHC(O)NR") bzw. mindestens zwei C=C-Doppelbindungen und 5 bis 50 Kohlenstoff-Atomen ableitet,
R = Alkyl, Alkenyl, Aryl, Alkylaryl oder Arylalkyl,
R' = Alkylen, Arylen oder Alkylenarylen,
R" = Wasserstoff, Alkyl oder Aryl,
X = Wasserstoff, Halogen, Hydroxy, Alkoky, Acyloxy, Alkylcarbonyl, Alkoxycarbonyl oder $NR''_2$,
a = 1, 2 oder 3,
b = 0, 1 oder 2
c = 0 oder 1,
x = eine ganze Zahl, deren Maximalwert der Anzahl von Doppelbindungen in der Verbindung B' minus entspricht, bzw. gleich der Anzahl von Doppelbindungen in der Verbindung B' ist, wenn c = 1 und A für NHC(O) 0 oder NHC(0)NR" steht,
wobei die Alkyl- bzw. Alkenyl-Reste gegebenenfalls substituierte geradkettige, verzweigte oder cyclische Reste mit 1 bis 20 Kohlenstoff-Atomen sind und Sauerstoff-, Schwefel-Atome und/oder Amino-Gruppen enthalten können, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkyl- und Aryl-Resten ableiten.

**7.** Sphärische Partikel nach mindestens einem der Ansprüche 1 bis 3, **dadurch gekennzeichnet, daß** sich eine oder mehrere der hydrolytisch kondensierten Si-Verbindungen der Oberflächenmodifizierung von Monomeren der allgemeinen Formel V ableiten,

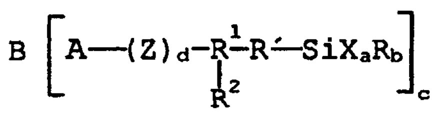

(V)

in der die Reste und Indices gleich oder verschieden sind und folgende Bedeutung haben:

B = ein geradkettiger oder verzweigter organi scher Rest mit mindestens einer C=C-Doppelbindung und 4 bis 50 Kohlenstoff-Atomen;
X = Wasserstoff, Halogen, Hydroxy, Alkoxy, Acyloxy, Alkylcarbonyl, Alkoxycarbonyl oder $NR''_2$;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoff-Atomen, wobei diese Reste Sauerstoff-, Schwefel-Atome und/oder Aminogruppen enthalten können;
R" = Wasserstoff, Alkyl oder Aryl;
A = 0, S oder NH für

d = 1 und
Z = CO und
$R^1$ = gegebenenfalls Sauerstoff-, Schwefel-Atome und/oder Amino-Gruppen enthaltendes Alkylen, Arylen oder Alkylenarylen mit jeweils 1 bis 10 Kohlenstoff-Atomen und
$R^2$ = H oder COOH oder

A = 0, S, NH oder COO für

d = 0 oder 1 und
Z = CHR, mit R = H, Alkyl, Aryl oder Alkylaryl, und
$R^1$ = gegebenenfalls Sauerstoff-, Schwefel-Atome und/oder Amino-Gruppen enthaltendes Alkylen, Arylen oder Alkylenarylen mit jeweils 1 bis 10 Kohlenstoff-Atomen und
$R^2$ = OH; oder

A = S für

d = 1 und
Z = CO und
$R^1$ = N und
$R^2$ = H;

a = 1, 2 oder 3;
b = 0, 1 oder 2, mit a+b=3;
c = 1, 2, 3 oder 4.

**8.** Sphärische Partikel nach mindestens einem der AnSprüche 1 bis 3, **dadurch gekennzeichnet, daß** sich eine oder mehrere der hydrolytisch kondensierten Si-Verbindungen der Oberflächenmodizierung und Monomeren der allgemeinen Formel VI ableiten,

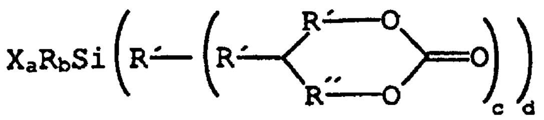

(VI)

in der die Reste und Indices gleich oder verschieden sind und die folgende Bedeutung haben:

X = Wasserstoff, Halogen, Hydroxy, Alkoxy, Acyloxy, Alkylcarbonyl, Alkoxycarbonyl oder $NR^2_2$;
R' = Alkyien, Arylen, Arylenalkylen oder Alkylenarylen mit jeweils 0 bis 10 Kohlenstoff-Atomen, wobei diese Reste Sauerstoff-, Schwefel-Atome und/oder Amino-Gruppen enthalten können;
R" = Alkylen, Arylen, Arylenalkylen oder Alkylenarylen mit jeweils 1 bis 10 C-Atomen, wobei diese Reste Sauerstoff-, Schwefelatome und/oder Amino-Gruppen enthalten können;
$R^2$ = Wasserstoff, Alkyl oder Aryl;
a = 1, 2 oder 3;
b = 0, 1 oder 2, mit a+b = 1, 2 oder 3
c = 1, 2, 3, 4, 5 oder 6;
d = 4-a-b.

**9.** Sphärische Partikel nach mindestens einem der Ansprüche 1 bis 3, **dadurch gekennzeichnet, daß** sich eine oder mehrere der hydrolytisch kondensierten Si-Verbindungen der Oberflächenmodifizierung von Monomeren der allgemeinen Formel VII ableiten,

$$Y_nSiX_mR_{4-(n+m)} \quad \text{(VII)}$$

in der die Reste X, Y und R gleich oder verschieden sind und folgende Bedeutung haben:

R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder $NR'_2$, mit R'= Wasserstoff, Alkyl oder Aryl,
Y = ein Substituent, der einen substituierten oder unsubstituierten 1, 4, 6-Trioxaspiro-[4,4]-nonan-Rest enthält,
n = 1, 2 oder 3,
m = 1, 2 oder 3, mit n + m ≤ 4.

**10.** Sphärische Partikel nach mindestens einem der Ansprüche 1 bis 3, **dadurch gekennzeichnet, daß** sich eine oder mehrere der hydrolytisch kondensierten Si-Verbindungen der Oberflächenmodizierung von Monomeren der allgemeinen Formel VIII ableiten,

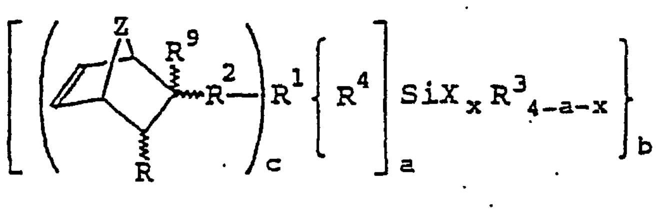 (VIII)

in der die Reste und Indices gleich oder verschieden sind und folgende Bedeutung haben:

R = Wasserstoff, $R^2$-$R^1$-$R^4$-$SiX_xR^3_{3-x}$, Carboxyl-, Alkyl, Alkenyl, Aryl, Alkylaryl oder Arylalkyl mit jeweils 1 bis 15 Kohlenwasserstoff-Atomen, wobei diese Reste Sauerstoff- oder Schwefel-Atome, Ester-, Carbonyl-, Amid- oder Aminogruppen enthalten können;
$R^1$ = Alkylen, Arylen, Arylenalkylen oder Alkylenarylen mit jeweils 0 bis 15 Kohlenstoff-Atomen, wobei diese Reste Sauerstoff- oder Schwefel-Atome, Ester-, Carbonyl-, Amid oder Aminogruppen enthalten können;
$R^2$ = Alkylen, Arylen, Arylenalkylen oder Alkylenarylen mit jeweils 0 bis 15 Kohlenstoff-Atomen, wobei diese Reste Sauerstoff- oder Schwefel-Atome, Ester, Carbonyl-, Amid- oder Aminogruppen enthalten können.;
$R^3$ = Alkyl, Alkenyl, Aryl, Alkylaryl oder Arylalkyl mit jeweils 1 bis 15 Kohlenstoff-Atomen, wobei diese Reste Sauerstoff- oder Schwefel-Atome, Ester-, Carbonyl-, Amid-oder Aminogruppen enthalten können;
$R^4$ = $-(CHR^6-CHR^6)_n$, mit n = o oder 1, $CHR^6$-$CHR^6$-S-$R^5$-, - $CHR^6$-$CHR^6$-$NR^6$-$R^5$-, -Y-CS-NH-$R^5$-, -S-$R^5$, -Y-CO-NH-$R^5$, -CO-O-$R^5$-, -Y-CO-$C_2H_3$(COOH)-$R^5$-, -Y-CO-$C_2H_3$(OH)-$R^5$- oder -CO-$NR^6$-$R^5$;
$R^5$ = Alkylen, Arylen, Arylenalkylen oder Alkylenarylen mit jeweils 1 bis 15 Kohlenstoff-Atomen, wobei diese Reste Sauerstoff- oder Schwefel-Atome, Ester-, Carbonyl-, Amid-oder Aminogruppen enthalten können;
$R^6$ = Wasserstoff, Alkyl oder Aryl mit 1 bis 10 Kohlenstoff-Atomen;
$R^9$ = Wasserstoff, Alkyl, Alkenyl, Aryl, Alkylaryl oder Arylalkyl mit jeweils 1 bis 15 Kohlenstoff-Atomen, wobei diese Reste Sauerstoffoder Schwefel-Atome, Ester-, Carbonyl-, Amid-oder Aminogruppen enthalten können;
X = Wasserstoff, Halogen, Hydroxy, Alkoxy, Acyloxy, Alkylcarbonyl, Alkoxycarbonyl oder $NR''_2$.mit R'' = Wasserstoff, Alkyl oder Aryl;
Y = -0-, -S- oder -$NR^6$-;
Z = -0- oder $-(CHR^6)_m-$, mit m = 1 oder 2;
a = 1, 2 oder 3, mit b = 1 für a = 2 oder 3;
b = 1, 2 oder 3, mit a = 1 für b = 2 oder 3;
c = 1 bis 6;
x = 1, 2 oder 3;
a+x = 2, 3 oder 4.

**11.** Sphärische Partikel nach mindestens einem der Ansprüche 1 bis 10, **dadurch gekennzeichnet, daß** sie im Inneren mit einer oder mehreren der hydrolytisch kondensierten Metallverbindungen, die sich von Monomeren der allgemeinen Formeln I

$$R_a(Z'R'')_bMX_{c-(a+b)} \quad (I)$$

oder II

$$R_a(Z'R'')_b\,SnX_{c-(a+b)} \quad (II)$$

ableiten, modifiziert sind, wobei die Indices, die in den Ansprüchen 4, 5 und 6 angegebene Bedeutung besitzen, mit der Maßgabe, daß a+b auch 0 sein kann.

**12.** Verfahren zur Herstellung von sphärischen Partikeln nach mindestens einem der Ansprüche 1 bis 11, **dadurch**

**gekennzeichnet, daß** man auf sphärische Metalloxidpartikel eine oder mehrere Schalen aus Metalloxiden und/oder aus Metalloxid-Gemischen aufbringt, wobei als Metalloxid zumindest teilweise $SnO_2$ verwendet wird, jeweils durch hydrolytische Kondensation einer oder mehrerer hydrolytisch kondensierbarer Verbindungen der Elemente Si, B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, und daß man die resultierenden Partikel einer Oberflächenmodifizierung unterwirft, indem man eine oder mehrere organisch modifizierte und hydrolytisch kondensierbare Verbindungen der Elemente Sn, Si, B, Al, P, Pb, der Übergangsmetalle, der Lanthaniden und der Actiniden, und/oder von den oben genannten Verbindungen abgeleitete Vorkondensate, gegebenenfalls in Anwesenheit eines Katalysators und/oder eines Lösungsmittels durch Einwirken von Wasser oder Feuchtigkeit auf die Partikeloberfläche aufkondensiert.

**13.** Verfahren zur Herstellung von sphärischen Partikeln nach mindestens einem der Ansprüche 1 bis 11, **dadurch gekennzeichnet, daß** man eine Mischung aus einer hydrolytisch kondensierbaren Sn-Verbindung und mindestens einer weiteren hydrolytisch kondensierbaren Verbindung der Elemente Si, B, Al, P, Pb, der ÜbergangsMetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit einer hydrolytischen Kondensation unterwirft, und daß man die resultierenden Partikel einer Oberflächenmodifizierung unterwirft, indem man eine oder mehrere organisch modifizierte und hydrolytisch kondensierbare Verbindungen der Elemente Sn, Si, B, Al, P, Pb, der Übergangsmetalle, der Lanthaniden und der Actiniden, und/oder von den oben genannten Verbindungen abgeleitete Vorkondensate, gegebenenfalls in Anwesenheit eines Katalysators und/oder eines Lösungsmittels durch Einwirken von Wasser oder Feuchtigkeit auf die Partikeloberfläche aufkondensiert..

**14.** Verfahren zur Herstellung von sphärischen Partikeln nach mindestens einem der Ansprüche 1 bis 11, **dadurch gekennzeichnet, daß** mindestens Sn als ein ausfällbares Oxid(hydrat) in gelöster Form oder in Form eines Sols in wässriger Phase enthalten ist und unter Verwendung eines Emulgators in einer organischen Flüssigkeit emulgiert und die Ausfällung des $SnO_2$-Hydrates oder anderer Oxid(hydrate) in den emulgierten Wassertröpfchen durch Lösung mindestens einer aus quaternären Ammonium-, Phosphonium- und anderen Oniumverbindungen sowie Salzen langkettiger organischer Säuren ausgewählter Verbindungen, vor, während oder nach der Bildung der Emulsion bewirkt wird, wobei die betreffende Verbindung entweder bereits in der OH- bzw. H-Form vorliegt oder in situ erzeugt wird, worauf das Wasser destillativ entfernt wird, und daß man die resultierenden Partikel einer Oberflächenmodifizierung unterwirft, indem man eine oder mehrere organisch modifizierte und hydrolytisch kondensierbare Verbindungen der Elemente Sn, Si, B, Al, P, Pb, der Übergangsmetalle, der Lanthaniden und der Actiniden, und/oder von den oben genannten Verbindungen abgeleitete Vorkondensate, gegebenenfalls in Anwesenheit eines Katalysators und/oder eines Lösungsmittels durch Einwirken von Wasser oder Feuchtigkeit auf die Partikeloberfläche aufkondensiert.

**15.** Verfahren nach mindestens einem der Ansprüche 12 bis 14, **dadurch gekennzeichnet, daß** sich eine oder mehrere der hydrolytisch kondensierten Metallverbindungen der Modifizierung von Monomeren der allgemeinen Formel 1 ableiten,

$$R_a(Z'R'')_b MX_{c-(a+b)} \qquad \text{(I)}$$

in der die Reste und Indices gleich oder verschieden sind und wie in Anspruch 3 definiert sind.

**16.** Verfahren nach mindestens einem der Ansprüche 12 bis 14, **dadurch gekennzeichnet, daß** sich eine oder mehrere der hydrolytisch kondensierten Sn-Verbindungen der Modifizierung von Monomeren der allgemeinen Formel II ableiten,

$$R_a(Z'R'')_b\, SnX_{c-(a+b)} \qquad \text{(II)}$$

in der die Reste und Indices gleich oder verschieden sind und wie in Anspruch 4 definiert sind.

**17.** Verfahren nach mindestens einem der Ansprüche 12 bis 14, **dadurch gekennzeichnet, daß** sich eine oder mehrere der hydrolytisch kondensierten Si-Verbindungen der Oberflächenmodifizierung von Monomeren der allgemeinen Formel III ableiten,

$$R_a(Z'R'')_bSiX_{c-(a+b)} \qquad \text{(III)}$$

in der die Reste und Indices gleich oder verschieden sind und wie in Anspruch 5 definiert sind.

**18.** Verfahren nach mindestens einem der Ansprüche 12 bis 14, **dadurch gekennzeichnet, daß** sich eine oder mehrere der hydrolytisch kondensierten Si-Verbindungen der Oberflächenmodifizierung von Monomeren der allgemeinen Formel IV ableiten:

$$\{X_aR_bSi[(R'A)_c]_{(4-a-b)}\}_x\ B \qquad \text{(IV)}$$

in der die Reste und Indices gleich oder verschieden sind und wie in Anspruch 6 definiert sind.

**19.** Verfahren nach mindestens einem der Ansprüche 12 bis 18, **dadurch gekennzeichnet, daß** sich eine oder mehrere der hydrolytisch kondensierten Si-Verbindungen der Oberflächenmodifizierung von Monomeren der allgemeinen Formel V ableiten,

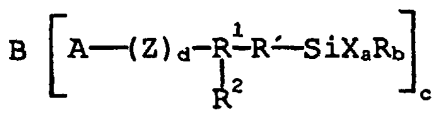

(V)

in der die Reste und Indices gleich oder verschieden sind und wie in Anspruch 7 definiert sind.

**20.** Verfahren nach mindestens einem der Ansprüche 12 bis 19, **dadurch gekennzeichnet, daß** sich eine oder mehrere der hydrolytisch kondensierten Si-Verbindungen der Oberflächenmodifizierung von Monomeren der allgemeinen Formel VI ableiten,

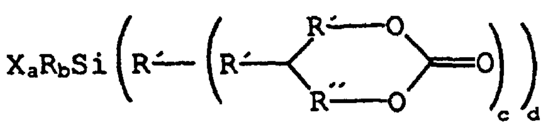

(VI)

in der die Reste und Indices gleich oder verschieden sind und wie in Anspruch 8 definiert sind.

**21.** Verfahren nach mindestens einem der Ansprüche 12 bis 20, **dadurch gekennzeichnet, daß** sich eine oder mehrere der hydrolytisch kondensierten Si-Verbindungen der Oberflächenmodifizierung von Monomeren der allgemeinen Formel VII ableiten,

$$Y_nSiX_mR_{4-(n+m)} \qquad \text{(VII)}$$

in der die Reste X, Y und R gleich oder verschieden sind und wie in Anspruch 9 definiert sind.

**22.** Verfahren nach mindestens einem der Ansprüche 12 bis 21 **dadurch gekennzeichnet, daß** sich eine oder mehrere der hydrolytisch kondensierten Si-Verbinungen der Oberflächenmodifizierung von Monomeren der allgemeinen Formel VIII ableiten,

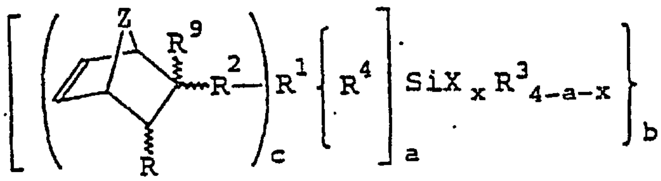

(VIII)

in der die Reste und Indices gleich oder verschieden sind und wie in Anspruch 10 definiert sind.

**23.** Verwendung der sphärischen Partikel nach einem oder mehreren der Ansprüche 1 bis 11, für Bulkmaterialien, Beschichtungen, Folien,' elektrophoretische Abscheidungen, für optische, elektrooptische oder optoelektronische Komponenten, in der Chromatographie, der Katalyse, im medizinischen Bereich, speziell z.B. als röntgenopaker Füllstoff im Dentalsektor bzw. als Carrier für pharmakologische Wirkstoffe.

**24.** Verwendung nach Anspruch 23, **dadurch gekennzeichnet, daß** der Anteil des Füllstoffes an der Gesamtmenge 30 bis 98 Gew.-%, bevorzugt 50 bis 90 Gew.-%, beträgt.

## Claims

**1.** Spherical particles produced by a sol-gel process or hydrolytically with the following features:

- they have a size of between 5 and 10 000 nm;
- they contain $SnO_2$ or $SnO_2$ and at least one further oxide of the elements of 1 to 5 main groups and/or of the transition metals, wherein the oxides can also have organic groups;
- the surface of the particles is modified with organic groups, the surface modification having been achieved by partial or completely hydrolytic condensation of one or more hydrolytically condensable compounds of silicon and possibly other elements from the group B, Al, P, Sn, Pb, of the transition metals, lanthanides and actinides, and/or precondensates derived from the above-mentioned compounds, possibly in the presence of a catalyst and/or a solvent by the action of water or moisture;
- the $SnO_2$ content of the particles lies between 0.1 and 99.9% by weight;
- they have an onion skin-type structure or a homogeneous distribution or a particle in matrix structure of the metal oxides.

**2.** Spherical particles according to Claim 1, **characterised in that** the $SnO_2$ content of the particles lies in the range of 10 to 90% by weight.

**3.** Spherical particles according to Claim 1 or 2, **characterised in that** one or more of the hydrolytically condensed metal compounds are derived from monomers of the general formula I

$$R_a(Z'R'')_bMX_{c-(a+b)} \qquad (I)$$

wherein the meaning of the residues and indices is as follows:

R = alkyl, alkenyl, aryl, alkylaryl or arylalkyl;
R'' = alkylene, or alkenylene, wherein these residues can contain oxygen, sulphur atoms and/or amino groups;
X = hydrogen, halogen, hydroxy, alkoxy, alcyloxy, alkylcarbonyl, alkoxycarbonyl or $NR'_2$, with R' = hydrogen, alkyl or aryl;
Z' = halogen or a possibly substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group;
a = 0, 1, 2, 3, 4, 5, 6 or 7;
b = 0, 1, 2, 3, 4, 5, 6 or 7 with a+b = 1, 2, 3, 4, 5, 6 or 7;
c = 1, 2, 3, 4, 5, 6, 7 or 8 and
M = elements of the 1st to 5th main group or of the transition metals.

**4.** Spherical particles according to Claims 1 to 3, **characterised in that** one or more of the hydrolytically condensed Sn compounds are derived from monomers of the general formula II

$$R_a(Z'R'')_bSnX_{c-(a+b)} \qquad (II)$$

wherein the meaning of the residues and indices is as follows:

R = alkyl, alkenyl, aryl, alkylaryl or arylalkyl;
R'' = alkylene, or alkenylene, wherein these residues can contain oxygen, sulphur atoms and/or amino groups;
X = hydrogen, halogen, hydroxy, alkoxy, acyloxy, alkylcarbonyl, alkoxycarbonyl or $NR'_2$, with R' = hydrogen, alkyl or aryl;
Z' = halogen or a possibly substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group;
a = 0, 1 or 3;
b = 0, 1, 2 or 3 with a+b = 1, 2 or 3;
c = 2, 4.

**5.** Spherical particles according to at least one of Claims 1 to 3, **characterised in that** one or more of the hydrolytically condensed Si compounds of the surface modification are derived from monomers of the general formula III

$$R_a(Z'R'')_bSiX_{c-(a+b)} \qquad (III)$$

wherein the meaning of the residues and indices is as follows:

R = alkyl, alkenyl, aryl, alkylaryl or arylalkyl;
R'' = alkylene, or alkenylene, wherein these residues can contain oxygen, sulphur atoms and/or amino groups;
X = hydrogen, halogen, hydroxy, alkoxy, acyloxy, alkylcarbonyl, alkoxycarbonyl or $NR'_2$, with R' = hydrogen, alkyl or aryl;
Z' = halogen or a possibly substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group;
a = 0, 1 or 3;
b = 0, 1, 2 or 3 with a+b = 1, 2 or 3;
c = 2 or 4.

**6.** Spherical particles according to at least one of Claims 1 to 3, **characterised in that** one or more of the hydrolytically condensed Si compounds of the surface modification are derived from monomers of the general formula IV

$$\{X_aR_bSi[(R'A)_c]_{(4-a-b)}\}_xB \qquad (IV)$$

wherein the residues and indices are the same or different and have the following meaning:

A = O, S, PR'', NHC(O)O or NHC(O)NR'';
B = a straight-chain or branched organic residue, which is derived from a compound B' with at least one (for c=1 and A = NHC(O) or NHC(O)NR'') or at least two C=C double bonds and 5 to 50 carbon atoms;
R = alkyl, alkenyl, aryl, alkylaryl or arylalkyl;
R' = alkylene, arylene or alkylene arylene;
R'' = hydrogen, alkyl or aryl;
X = hydrogen, halogen, hydroxy, alkoxy, acyloxy, alkylcarbonyl, alkoxycarbonyl or $NR''_2$;
a = 1, 2 or 3;
b = 0, 1 or 2;
c = 0 or 1;
x = a whole number, the maximum value of which corresponds to the number of double bonds in the compound B' minus or is equal to the number of double bonds in the compound B', when c = 1 and A stands for NHC(O)O or NHC(O)NR'';

wherein the alkyl or alkenyl residues are possibly substituted straight-chain, branched or cyclic residues with 1 to 20 carbon atoms and can contain oxygen, sulphur atoms and/or amino groups, aryl stands for possibly substituted phenyl, naphthyl or biphenyl, and the above alkoxy, acyloxy, alkylcarbonyl, alkoxycarbonyl, alkylaryl, arylalkyl, arylene, alkylene and alkylene aryl residues are derived from the above-defined alkyl and aryl residues.

**7.** Spherical particles according to at least one of Claims 1 to 3, **characterised in that** one or more of the hydrolytically condensed Si compounds of the surface modification are derived from monomers of the general formula V

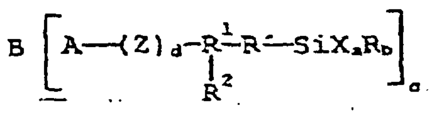

(V)

wherein the residues and indices are the same or different and have the following meaning:

B = a straight-chain or branched organic residue with at least one C=C double bond and 4 to 50 carbon atoms;
X = hydrogen, halogen, hydroxy, alkoxy, acyloxy, alkylcarbonyl, alkoxy-carbonyl or $NR''_2$;
R = alkyl, alkenyl, aryl, alkylaryl or arylalkyl;
R' = alkylene, arylene, arylene alkylene or alkylene arylene respectively with 0 to 10 carbon atoms, wherein these residues can contain oxygen, sulphur atoms and/or amino groups;
R" = hydrogen, alkyl or aryl;
A = O, S or NH for

d = 1 and
Z = CO and
$R^1$ = alkylene, arylene or alkylene arylene possibly containing oxygen, sulphur atoms and/or amino groups, respectively with 1 to 10 carbon atoms and
$R^2$ = H or COOH or

A = O, S, NH or COO for

d = 0 or 1 and
Z = CHR, with R = H, alkyl, aryl or alkylaryl, and
$R^1$= alkylene, arylene or alkylene arylene possibly containing oxygen, sulphur atoms and/or amino groups, respectively with 1 to 10 carbon atoms and
$R^2$ = OH; or

A = S for

d = 1 and
Z = CO and
$R^1$ = N and
$R^2$ = H;

a = 1, 2 or 3;
b = 0, 1 or 2, with a+b=3;
c = 1, 2, 3 or 4.

**8.** Spherical particles according to at least one of Claims 1 to 3, **characterised in that** one or more of the bydrolytically condensed Si compounds of the surface modification are derived from monomers of the general formula VI

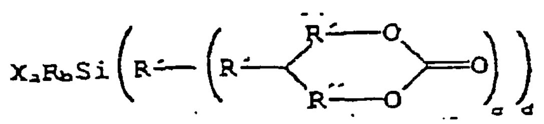

(VI)

wherein the residues and indices are the same or different and have the following meaning:

X = hydrogen, halogen, hydroxy, alkoxy, acyloxy, alkylcarbonyl, alkoxycarbonyl or $NR^2_2$;
R' = alkylene, arylene, arylene alkylene or alkylene arylene respectively with 0 to 10 carbon atoms, wherein these residues can contain oxygen, sulphur atoms and/or amino groups;
R" = alkylene, arylene, arylene alkylene or alkylene arylene respectively with 1 to 10 C atoms, wherein these residues can contain oxygen, sulphur atoms and/or amino groups;
$R^2$ = hydrogen, alkyl or aryl;
a = 1, 2 or 3;
b = 0, 1 or 2, with a+b = 1, 2 or 3;
c = 1, 2, 3, 4, 5 or 6;
d = 4-a-b.

9. Spherical particles according to at least one of Claims 1 to 3, **characterised in that** one or more of the hydrolytically condensed Si compounds of the surface modification, are derived from monomers of the general formula VII

$$Y_nSiX_mR_{4-(n+m)} \quad \text{(VII)}$$

wherein the residues and indices are the same or different and have the following meaning:

R = alkyl, alkenyl, aryl, alkylaryl or arylalkyl;
X = hydrogen, halogen, hydroxy, alkoxy, acyloxy, alkylcarbonyl, alkoxycarbonyl or $NR'_2$, with R' = hydrogen, alkyl or aryl;
Y = a substituent, which contains a substituted or non-substituted 1,4,6-trioxaspiro-[4,4]-nonan residue;
n = 1, 2 or 3;
m = 1, 2 or 3, with $n + m \leq 4$.

10. Spherical particles according to at least one of Claims 1 to 3, **characterised in that** one or more of the hydrolyrically condensed Si compounds of the surface modification are derived from monomers of the general formula VIII

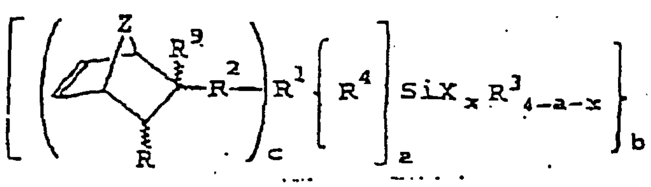

(VIII)

wherein the residues and indices are the same or different and have the following meaning:

R = hydrogen, $R^2$-$R^1$-$R^4$-$SiX_xR^3_{3-x}$, carboxyl, alkyl, alkenyl, aryl, alkylaryl or arylalkyl respectively with 1 to 15 hydrocarbon atoms, wherein these residues can contain oxygen or sulphur atoms, ester, carbonyl, amide or amino groups;
$R^1$ = alkylene, arylene, arylene alkylene or alkylene arylene respectively with 0 to 15 carbon atoms, wherein these residues can contain oxygen or sulphur atoms, ester, carbonyl, amide or amino groups;
$R^2$ = alkylene, arylene, arylene alkylene or alkylene arylene respectively with 0 to 15 carbon atoms, wherein these residues can contain oxygen or sulphur atoms, ester, carbonyl, amide or amino groups;
$R^3$ = alkyl, alkenyl, aryl, alkylaryl or arylalkyl respectively with 1 to 15 carbon atoms, wherein these residues can contain oxygen or sulphur atoms, ester, carbonyl, amide or amino groups;

$R^4$ = -(-CHR$^6$-CHR$^6$)$_n$, with n = 0 or 1, CHR$^6$-CHR$^6$-S-R$^5$-, - CHR$^6$-CHR$^6$-NR$^6$-R$^5$-, -Y-CS-NH-R$^5$-, -S-R$^5$, -Y-CO-NH-R$^5$, -CO-O-R$^5$-, -Y-CO-$C_2H_3$(COOH)-R$^5$-, -Y-CO-$C_2H_3$(OH)-R$^5$- or -CO-NR$^6$-R$^5$;
$R^5$ = alkylene, arylene, arylene alkylene or alkylene arylene respectively with 1 to 15 carbon atoms, wherein these residues can contain oxygen or sulphur atoms, ester, carbonyl, amide or amino groups;
$R^6$ = hydrogen, alkyl or aryl with 1 to 10 carbon atoms;
$R^9$ = hydrogen, alkyl, alkenyl, aryl, alkylaryl or arylalkyl respectively with 1 to 15 carbon atoms, wherein these residues can contain oxygen or sulphur atoms, ester, carbonyl, amide or amino groups;
X = hydrogen, halogen, hydroxy, alkoxy, acyloxy, alkylcarbonyl, alkoxycarbonyl or NR"$_2$, with R" = hydrogen, alkyl or aryl;
Y = -O-, -S- or -NR$^6$-;
Z = -O- or -(CHR$^6$)$_m$-, with m = 1 or 2;
a = 1, 2 or 3, with b = 1 for a = 2 or 3;
b = 1, 2 or 3, with a = 1 for b = 2 or 3;
c = 1 to 6;
x = 1, 2 or 3;
a+x = 2, 3 or 4.

**11.** Spherical particles according to at least one of Claims 1 to 10, **characterised in that** they are modified internally with one or more ofthe hydrolytically condensed metal compounds, which are derived from monomers of the general formula I

$$R_a(Z'R")_bMX_{c-(a+b)} \qquad (I)$$

or II

$$R_a(Z'R")_bSnX_{c-(a+b)} \qquad (II)$$

wherein the indices have the meaning specified in Claims 4, 5 and 6 with the provision that a+b can also be 0.

**12.** Process for the production of spherical particles according to at least one of Claims 1 to 11, **characterised in that** one or more shells comprising metal oxides and/or metal oxide mixtures is/are applied to spherical metal oxide particles,
wherein $SnO_2$ is used at least partially as metal oxide, respectively by hydrolytic condensation of one or more hydrolytically condensable compounds of the elements Si, B, Al, P, Sn, Pb, of the transition metals, lanthanides and actinides, and/or precondensates derived from the above-mentioned compounds, possibly in the presence of a catalyst and/or a solvent by the action of water or moisture; and that the resulting particles are subjected to a surface modification by . condensing one or more organically modified and hydrolytically condensable compounds of the elements Sn, Si, B, Al, P, Pb, of the transition metals, lanthanides and actinides, and/or precondensates derived from the above-mentioned compounds, possibly in the presence of a catalyst and/or a solvent by the action of water or moisture, onto the particle surface.

**13.** Process for the production of spherical particles according to at least one of Claims 1 to 11, **characterised in that** a mixture of a hydrolytically condensable Sn compound and at least one further hydrolytically condensable compound of the elements Si, B, Al, P, Pb, of the transition metals, lanthanides and actinides, and/or precondensates derived from the above-mentioned compounds, possibly in the presence of a catalyst and/or a solvent by the action of water or moisture, is subjected to a hydrolytic condensation; and that the resulting particles are subjected to a surface modification by condensing one or more organically modified and hydrolytically condensable compounds of the elements Sn, Si, B, Al, P, Pb, of the transition metals, lanthanides and actinides, and/or precondensates derived from the above-mentioned compounds, possibly in the presence of a catalyst and/or a solvent by the action of water or moisture, onto the particle surface.

**14.** Process for the production of spherical particles according to at least one of Claims 1 to 11, **characterised in that** at least Sn is contained as a precipitable oxide (hydrate) in dissolved form or in the form of a sol in aqueous phase and is emulsified in an organic liquid using an emulsifier, and the precipitation of the $SnO_2$ hydrate or other oxide (hydrates) in the emulsified water droplets by dissolving at least one compound selected from quaternary ammonium, phosphonium and other onium compounds as well as salts of long-chain organic acids is effected before, during and after formation of the emulsion, wherein the respective compound is either already present in OH or H form or is generated in situ, whereupon the water is removed by distillation; and that the resulting particles are subjected to a surface modification by condensing one or more organically modified and hydrolytically condensable compounds of the elements Sn, Si, B, Al, P, Pb, of the transition metals, lanthanides and actinides, and/or precondensates derived from the above-mentioned compounds, possibly in the presence of a catalyst and/or a solvent by the action of water or moisture, onto the particle surface.

**15.** Process according to at least one of Claims 12 to 14, **characterised in that** one or more of the hydrolytically condensed metal compounds of the modification are derived from monomers of the general formula I

$$R_a(Z'R'')_bMX_{c-(a+b)} \quad (I)$$

wherein the residues and indices are the same or different and are defined as in Claim 3.

**16.** Process according to at least one of Claims 12 to 14, **characterised in that** one or more of the hydrolytically condensed Sn compounds of the modification are derived from monomers of the general formula II

$$R_a(Z'R^{n}'')_bSnX_{c-(a+b)} \quad (II)$$

wherein the residues and indices are the same or different and are defined as in Claim 4.

**17.** Process according to at least one of Claims 12 to 14, **characterised in that** one or more of the hydrolytically condensed Si compounds of the surface modification are derived from monomers of the general formula III

$$R_a(Z'R'')_bSiX_{c-(a+b)} \quad (III)$$

wherein the residues and indices are the same or different and are defined as in Claim 5.

**18.** Process according to at least one of Claims 12 to 14, **characterised in that** one or more of the hydrolytically condensed Si compounds of the surface modification are derived from monomers of the general formula IV

$$\{X_aR_bSi[(R'A)_c]_{(4-a-b)}\}_xB \quad (IV)$$

wherein the residues and indices are the same or different and are defined as in Claim 6.

**19.** Process according to at least one of Claims 12 to 18, characterised is that one or more of the hydrolytically condensed Si compounds of the surface modification are derived from monomers of the general formula V

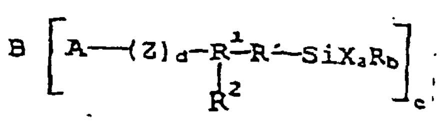

(V)

wherein the residues and indices are the same or different and are defined as in Claim 7.

**20.** Process according to at least one of Claims 12 to 19, **characterised in that** one or more of the hydrolytically condensed Si compounds of the surface modification are derived from monomers of the general formula VT

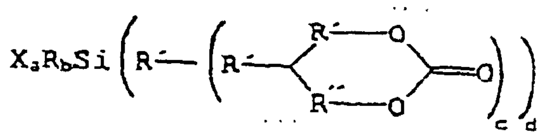

(VI)

wherein the residues and indices are the same or different and are defined as in Claim 8.

**21.** Process according to at least one of Claims 12 to 20, **characterised in that** one or more of the hydrolytically condensed Si compounds of the surface modification are derived from monomers of the general formula VII

$$Y_nSiX_mR_{1-(n+m)} \quad \text{(VII)}$$

wherein the residues X, Y and Rare the same or different and are defined as in Claim 9.

**22.** Process according to at least one of Claims 12 to 21, **characterised in that** one or more of the hydrolytically condensed Si compounds of the surface modification are derived from monomers of the general formula VIII

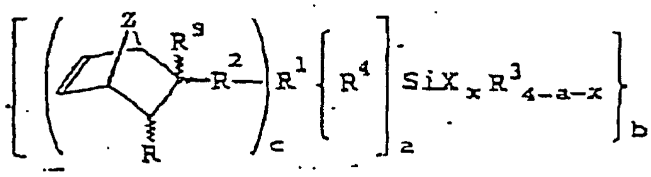

(VIII)

wherein the residues and indices are the same or different and are defined as in Claim 10.

**23.** Use of the spherical particles according to one or more of Claims 1 to 11, for bulk materials, coatings, foils, e lectrophoretic p recipitation processes, for optical, electro-optical or optoelectronic components, in chromatography, catalysis, in the medical field especially, for example, as X ray-opaque filler in dentistry or as a carrier for pharmacological active agents.

**24.** Use according to Claim 23, **characterised in that** the proportion of filler of the total amount amounts to 30 to 98% by weight, preferably 50 to 90% by weight.

## Revendications

**1.** Particules sphériques fabriquées par un procédé sol-gel ou par voie hydrolytique, présentant les caractéristiques suivantes :

- elles ont une taille entre 5 et 10.000 nm ;
- elles contiennent $SnO_2$ ou $SnO_2$ et au moins un autre oxyde des éléments des groupes principaux 1 à 5 et/ou des métaux de transition, ces oxydes pouvant aussi comporter des groupes organiques ;
- la surface des particules est modifiée avec des groupes organiques, cette modification de surface ayant été obtenue par condensation hydrolytique partielle ou complète d'une ou plusieurs combinaisons hydrolytiquement condensables du silicium et, le cas échéant, d'autres éléments appartenant au groupe d'éléments B, Al, P, Sn, Pb, aux métaux de transition, aux lanthanides, et aux actinides et/ou de pré-condensats dérivés des combinaisons ci-dessus citées, le cas échéant en présence d'un catalyseur et/ou d'un solvant, par action de l'eau ou de l'humidité ;
- la teneur en $SnO_2$ des particules se trouve entre 0,1 et 99,9 % en poids ;
- elles présentent une structure en forme de pelure d'oignon ou une répartition homogène ou une particule en structure de matrice des oxydes métalliques.

2. Particules sphériques selon la revendication 1, **caractérisées en ce que** la teneur en $SnO_2$ des particules se trouve dans une plage de 10 à 90 % en poids.

3. Particules sphériques selon la revendication 1 ou 2, **caractérisées en ce qu'** elles dérivent d'une ou plusieurs combinaisons métalliques hydrolytiquement condensées de monomères répondant à la formule générale I,

$$R_a\ (Z'R'')\ _bMX_{c-\ (a+b)} \qquad (I)$$

dans laquelle les restes et indices ont les significations suivantes :

R = représente un groupe alkyle, un groupe alcényle, un groupe aryle, un groupe alkyaryle ou un groupe arylalkyle ;
R" = représente un groupe alkylène ou un groupe alcénylène, ces restes pouvant contenir des atomes d'oxygène, des atomes de soufre et/ou des groupes amino ;
X = représente un atome d'hydrogène, un atome d'halogène, un groupe hydroxy, un groupe alcoxy, un groupe acyloxy, un groupe alkylcarbonyle, un groupe alcoxycarbonyle, ou un groupe $NR'_2$, R' représentant un atome d'hydrogène, un groupe alkyle ou un groupe ) aryle ;
Z' = représente un atome d'halogène ou un groupe amino, un groupe amide, un groupe aldéhyde, un groupe alkylcarbonyle, un groupe carboxy-mercapto, un groupe cyano, un groupe alcoxy, un groupe alcoxycarbonyle, un groupe acide sulfonique, un groupe acide phosphorique, un groupe acryloxy, un groupe méthacryloxy, un groupe époxy ou un groupe vinyle, le cas échéant substitué ;
a = 0, 1, 2, 3, 4, 5, 6 ou 7
b = 0, 1, 2, 3, 4, 5, 6, ou 7, a+b valant 1, 2, 3, 4, 5, 6 ou 7,
c = 1, 2, 3, 4, 5, 6, 7, ou 8 et
m représente des éléments des groupes principaux 1 à 5 ou des métaux de transition.

4. Particules sphériques selon les revendications 1 à 3, **caractérisées en ce qu'** une ou plusieurs des combinaisons de Sn hydrolytiquement condensées, dérivent de monomères répondant à la formule générale II,

$$R_a\ (Z'R'')\ _bSnX_{c-\ (a+b)} \qquad (III)$$

dans laquelle les restes et indices ont les significations suivantes

R = représente un groupe alkyle, un groupe alcényle, un groupe aryle, un groupe alkyaryle ou un groupe arylalkyle ;
R" = représente un groupe alkylène ou un groupe alcénylène, ces restes pouvant contenir des atomes d'oxygène, des atomes de soufre et/ou des groupes amino ;
X = représente un atome d'hydrogène, un atome d'halogène, un groupe hydroxy, un groupe alcoxy, un groupe acyloxy, un groupe alkylcarbonyle, un groupe alcoxycarbonyle, ou un groupe $NR'_2$, R' représentant un atome d'hydrogène, un groupe alkyle ou un groupe aryle ;
Z' = représente un atome d'halogène ou un groupe amino, un groupe amide, un groupe aldéhyde, un groupe alkylcarbonyle, un groupe carboxy-mercapto, un groupe cyano, un groupe alcoxy, un groupe alcoxycarbonyle, un groupe acide sulfonique, un groupe acide phosphorique, un groupe acryloxy, un groupe méthacryloxy, un groupe époxy ou un groupe vinyle, le cas échéant substitué ;
a = 0, 1 ou 3
b = 0, 1, 2, ou 3, a+b valant 1, 2 ou 3,
c = 2, 4.

5. Particules sphériques selon au moins l'une des revendications 1 à 3, **caractérisées en ce qu'**

une ou plusieurs des combinaisons de Si hydrolytiquement condensées de la modification de surface dérivent de monomères répondant à la formule générale III,

$$R_a\ (Z'R'')\ _bSiX_{c-\ (a+b}\qquad (III)$$

dans laquelle les restes et indices ont les significations suivantes :

R = représente un groupe alkyle, un groupe alcényle, un groupe aryle, un groupe alkyaryle ou un groupe arylalkyle ;
R" = représente un groupe alkylène ou un groupe alcénylène, ces restes pouvant contenir des atomes d'oxygène, des atomes de soufre et/ou des groupes amino ;
X = représente un atome d'hydrogène, un atome d'halogène, un groupe hydroxy, un groupe alcoxy, un groupe acyloxy, un groupe alkylcarbonyle, un groupe alcoxycarbonyle, ou un groupe $NR'_2$, R' représentant un atome d'hydrogène, un groupe alkyle ou un groupe aryle ;
Z' = représente un atome d'halogène ou un groupe amino, un groupe amide, un groupe aldéhyde, un groupe alkylcarbonyle, un groupe carboxy-mercapto, un groupe cyano, un groupe alcoxy, un groupe alcoxycarbonyle, un groupe acide sulfonique, un groupe acide phosphorique, un groupe acryloxy, un groupe méthacryloxy, un groupe époxy ou vinyle, le cas échéant substitué ;
a = vaut 0, 1 ou 3
b = vaut 0, 1, 2 ou 3, a+b valant 1, 2 ou 3
c = vaut 2 ou 4.

**6.** Particules sphériques selon au moins l'une des revendications 1 à 3,
**caractérisées en ce qu'**
une ou plusieurs des combinaisons de Si hydrolytiquement condensées de la modification de surface dérivent de monomères répondant à la formule générale IV,

$$(X_aR_bSi\ (\ (R'A)\ _c)\ _{(4-a-b)})\ _xB\qquad (IV)$$

dans laquelle les restes et indices sont identiques ou différents et ont la signification suivante :

A = représente O, S, un groupe PR", un groupe NHC (O) O ou un groupe NHC (O) NR",
A = représente un reste organique à chaîne droite ou ramifiée, qui dérive d'une combinaison B' avec au moins une (pour c valant 1 et A représentant un groupe NHC (O) ou un groupe NHC (O) NR") ou au moins deux doubles liaisons C=C et 5 à 50 atomes de carbone,
R = représente un groupe alkyle, un groupe alcényle, un groupe aryle, un groupe alkyaryle ou un groupe arylalkyle ;
R' = représente un groupe alkylène, un groupe arylène ou un groupe alkylènarylène,
R" = représente un atome d'hydrogène, un groupe alkyle ou un groupe aryle,
X = représente un atome d'hydrogène, un atome d'halogène, un groupe hydroxy, un groupe alcoxy, un groupe acyloxy, un groupe alkylcarbonyle, un groupe alcoxycarbonyle, ou un groupe $NR''_2$,
a = 1, 2 ou 3,
b = 0, 1 ou 2,
c = 0 ou 1,
x = représente un nombre entier, dont la valeur maximale correspond au nombre de doubles liaisons dans la combinaison B', ou est égal au nombre de doubles liaisons dans la combinaison B', lorsque c vaut 1 et A représente un groupe NHC (O) O ou un groupe NHC (O) NR", les restes alkyle ou alcényle pouvant être des restes à chaînes droites, ramifiées ou cycliques, le cas échéant substitués, comportant 1 à 20 atomes de carbone et pouvant contenir des atomes d'oxygène, des atomes de soufre et/ou des groupes amino, un groupe aryle représentant un groupe phényle, un groupe naphthyle ou un groupe biphényle, le cas échéant substitué, et les groupes alcoxy, acyloxy, alkylcarbonyle, alcoxycarbonyle, alkylaryle, arylalkyle, arylène, alkylène et alkylènaryle ci-dessus dérivant des restes alkyle et aryle ci-dessus définis.

**7.** Particules sphériques selon au moins l'une des revendications 1 à 3,
**caractérisées en ce qu'**

une ou plusieurs des combinaisons de Si hydrolytiquement condensées de la modification de surface dérivent de monomères répondant à la formule générale V,

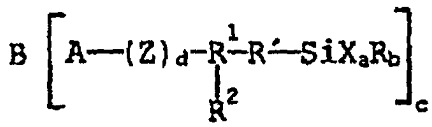 (V)

dans laquelle les restes et les indices sont identiques ou différents et ont la signification suivante :

B = représente un reste organique à chaîne droite ou ramifiée comportant au moins une double liaison C=C et 4 à 50 atomes de carbone ;
X = représente un atome d'hydrogène, un atome d'halogène, un groupe hydroxy, un groupe alcoxy, un groupe acyloxy, un groupe alkylcarbonyle, un groupe alcoxycarbonyle, ou un groupe $NR''_2$ ;
R = représente un groupe alkyle, un groupe alcényle, un groupe aryle, un groupe alkyaryle ou un groupe arylalkyle ;
R' = représente un groupe alkylène, un groupe arylène, un groupe arylène alkylène ou un groupe alkylène arylène comportant à chaque fois 0 à 10 atomes de carbone, ces restes pouvant contenir des atomes d'oxygène, des atomes de soufre et/ou des groupes amino ;
R" = représente un atome d'hydrogène, un groupe alkyle ou un groupe aryle ;
A = représente O, S ou un groupe NH quand

d = vaut 1 et
z = représente CO et

$R^1$ représente un groupe alkylène, un groupe arylène ou un groupe alkylènearylène, contenant le cas échéant des atomes d'oxygène, des atomes de soufre et/ou des groupes amino, comportant à chaque fois un à 10 atomes de carbone, et
$R^2$ représente H ou un groupe COOH, ou
A = représente 0, S, un groupe NH ou un groupe COO quand
d vaut 0 ou 1 et
Z représente un groupe CHR, dans lequel R représente H, un groupe alkyle, un groupe aryle ou un groupe alkyaryle,
et
$R^1$ représente un groupe alkylène, un groupe arylène ou un groupe alkylènarylène contenant, le cas échéant, des atomes d'oxygène, des atomes de soufre et/ou des groupes amino, comportant à chaque fois 1 à 10 atomes de carbone, et
$R^2$ représente un groupe OH ; ou
A représente S quand

d = 1 et
Z = représente un groupe CO et
$R^1$ = représente N et
$R^2$ = représente H ;

a = 1, 2 ou 3 ;
b = 0, 1, ou 2, a+b valant 3 ;
c = 1, 2, 3 ou 4.

**8.** Particules sphériques selon au moins l'une des revendications 1 à 3,
**caractérisées en ce qu'**
une ou plusieurs des combinaisons de Si hydrolytiquement condensées de la modification de surface dérivent de monomères répondant à la formule générale VI,

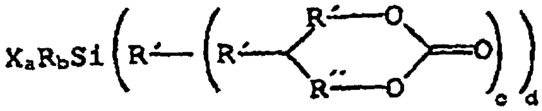 (VI)

dans laquelle les restes et indices sont identiques ou différents et ont la signification suivante :

X = représente un atome d'hydrogène, un atome d'halogène, un groupe hydroxy, un groupe alcoxy, un groupe acyloxy, un groupe alkylcarbonyle, un groupe alcoxycarbonyle, ou un groupe $NR^2_2$ ;
R' = représente un groupe alkylène, un groupe arylène, un groupe arylènalkylène ou un groupe alkylènarylène comportant à chaque fois 0 à 10 atomes de carbone, ces restes pouvant contenir des atomes d'oxygène, des atomes de soufre et/ou des groupes amino ;
R" = représente un groupe alkylène, un groupe arylène, un groupe arylènalkylène ou un groupe alkylènarylène comportant à chaque fois 1 à 10 atomes de carbone, ces restes pouvant contenir des atomes d'oxygène, des atomes de soufre et/ou des groupes amino ;
$R^2$ représente un atome d'hydrogène, un groupe alkyle ou un groupe aryle ;
a = 1, 2 ou 3 ;
b = 0, 1 ou 2, a+b valant 1, 2 ou 3 ;
c = 1, 2, 3, 4, 5 ou 6 ;
d = 4-a-b.

**9.** Particules sphériques selon au moins l'une des revendications 1 à 3,
**caractérisées en ce qu'**
une ou plusieurs des combinaisons de Si hydrolytiquement condensées de la modification de surface dérivent de monomères répondant à la formule générale VII,

$$Y_nSiX_mR_{4-(n+m)} \quad (VII)$$

dans laquelle les restes X, Y et R sont identiques ou différents et ont la signification suivante :

R = représente un groupe alkyle, un groupe alcényle, un groupe aryle, un groupe alkylaryle ou un groupe arylalkyle,
X = représente un atome d'hydrogène, un atome d'halogène, un groupe hydroxy, un groupe alcoxy, un groupe acyloxy, un groupe alkylcarbonyle, un groupe alcoxycarbonyle ou un groupe NR'2, où R' représente un atome d'hydrogène, un groupe alkyle ou un groupe aryle,
y = représente un substituant, qui contient un reste 1,4,6-trioxaspiro-(4,4) -nonane substitué ou non substitué.
n = vaut 1, 2 ou 3,
m = vaut 1, 2 ou 3, m + m étant $\leq$ 4.

**10.** Particules sphériques selon au moins l'une des revendications 1 à 3,
**caractérisées en ce qu'**
une ou plusieurs des combinaisons de Si hydrolytiquement condensées de la modification de surface dérivent de monomères répondant à la formule générale VIII,

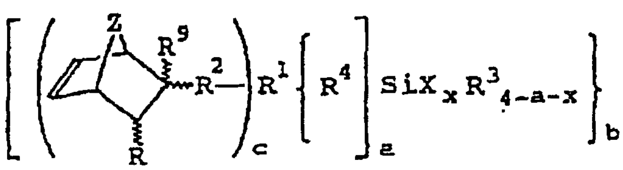 (VIII)

dans laquelle les restes et indices sont identiques ou différents et ont la signification suivante :

R = représente un atome d'hydrogène, $R^2$-$R^1$-$R^4$-$SiX_xR^3_{3-x}$, un groupe carboxyle, un groupe un groupe alcényle, un groupe aryle, un groupe alkylaryle ou un groupe arylalkyle, comportant à chaque fois 1 à 15 atomes de carbone, ces restes pouvant contenir des atomes d'oxygène ou des atomes de soufre, des groupes ester, des groupes carbonyle, des groupes amide ou des groupes amino ;
$R^1$ = représente un groupe alkylène, un groupe arylène, un groupe arylènalkylène ou un groupe alkylénarylène, comportant à chaque fois 0 à 15 atomes de carbone, ces restes pouvant contenir des atomes d'oxygène ou des atomes de soufre, des groupes ester, des groupes carbonyle, des groupes amide ou des groupes amino ;
$R^2$ = représente un groupe alkylène, un groupe arylène, un groupe arylènalkylène ou un groupe alkylènarylène, comportant à chaque fois 0 à 15 atomes de carbone, ces restes pouvant contenir des atomes d'oxygène ou des atomes de soufre, des groupes ester, des groupes carbonyle, des groupes amide ou des groupes amino ;
R3 = représente un groupe angle, un groupe alcényle, un groupe aryle, un groupe alkylaryle ou un groupe arylalkyle, comportant à chaque fois 1 à 15 atomes de carbone, ces restes pouvant contenir des atomes d'oxygène ou des atomes de soufre, des groupes ester, des groupes carbonyle, des groupes amide ou des groupes amino ;
$R^4$ = représente un groupe - $(-CHR^6-CHR^6)_n$,, n valant 0 ou 1, un groupe $CHR^6-CHR^6-S-R^5-$, un groupe $-CHR^6-CHR^6-NR^6-R^5-$, un groupe $-Y-CS-NH-R^5-$, un groupe - $S-R^5$, un groupe $-Y-CO-NH-R^5$, un groupe $-CO-O-R^5-$, un groupe $-Y-CO-C_2H_3$ (COOH) $-R^5-$, un groupe $-Y-CO-C_2H_3$ (OH) $-R^5-$ ou un groupe $-CO-NR^6-R^5$ ;
$R^5$ = représente un groupe alkylène, un groupe aylène, un groupe arylènalkylène ou un groupe alkylènarylène comportant à chaque fois 1 à 15 atomes de carbone, ces restes pouvant contenir des atomes d'oxygène, des atomes de soufre, des groupes ester, des groupes carbonyle, des groupes amide ou des groupes amino ;
$R^6$ = représente un atome d'hydrogène, un groupe alkyle ou un groupe aryle comportant 1 à 10 atomes de carbone ;
$R^9$ = représente un atome d'hydrogène un groupe alkyle, un groupe alcényle, un groupe aryle, un groupe alkylaryle ou un groupe arylalkyle comportant à chaque fois 1 à 15 atomes de carbone, ces restes pouvant contenir des atomes d'oxygène ou des atomes de soufre, des groupes ester, des groupes carbonyle, des groupes amide ou des groupes amino ;
X = représente un atome d'hydrogène, un atome d'halogène, un groupe hydroxy, un groupe alcoxy, un groupe acyloxy, un groupe alkylcarbonyle, un groupe alcoxycarbonyle ou un groupe NH"2, où R" représente un atome d'hydrogène, un groupe alkyle ou un groupe aryle ;
Y = représente -O-, -S- ou un groupe $-NR^6-$ ;
Z = représente -O- ou un groupe - $(CHR^6)_m$, où m vaut 1 ou 2 ;
a = 1, 2 ou 3, b valant 1 pour a = 2 ou 3 ;
b = 1, 2 ou 3, a valant 1 pour b = 2 ou 3 ;
c = 1 à 6 ;
x = 1, 2 ou 3 ;
a+x = 2, 3 ou 4.

**11.** Particules sphériques selon au moins l'une des revendications 1 à 10,
**caractérisées en ce qu'**
elles sont modifiées intérieurement avec une ou plusieurs combinaisons métalliques hydrolytiquement condensées qui dérivent de monomères répondant aux formules générales I

$$R_a\ (Z'R'')_b MX_{c-(a+b)} \qquad (I)$$

ou II

$$R_a\ (Z'R'')_b SnX_{c-(a+b)} \qquad (II)$$

les indices possédant la signification indiquée dans les revendications 1, 4 et 6, avec la précision que a+b peut également valoir 0.

**12.** Procédé de fabrication de particules sphériques selon au moins l'une des revendications 1 à 11,
**caractérisé en ce qu'**
on applique, sur des particules d'oxyde métallique sphériques, une ou plusieurs couches d'oxydes métalliques et/ou de mélanges d'oxydes métalliques, avec utilisation, comme oxyde métallique, au moins partiellement, de $SnO_2$,

à chaque fois par condensation hydrolytique d'une ou plusieurs combinaisons hydrolytiquement condensables des éléments Si, B, Al, P, Sn, Pb, des métaux de transition, des lanthanides et des actinides et/ou de pré-condensats dérivés des combinaisons ci-dessus citées, le cas échéant en présence d'un catalyseur et/ou d'un solvant par action d'eau ou d'humidité, et on soumet les particules résultantes à une modification de surface en condensant dessus une ou plusieurs combinaisons organiquement modifiées et hydrolytiquement condensables des éléments Sn, Si, B, Al, P, Pb, des métaux de transition, des lanthanides et des actinides et/ou des pré-condensats dérivés des combinaisons ci-dessus citées, le cas échéant en présence d'un catalyseur et/ou d'un solvant par action d'eau ou d'humidité sur la surface des particules.

**13.** Procédé de fabrication de particules sphériques selon au moins l'une des revendications 1 à 11,
**caractérisé en ce que**
l'on soumet à une condensation hydrolytique un mélange constitué d'une combinaison de Sn hydrolytiquement condensable et d'au moins une autre combinaison hydrolytiquement condensable des élément Si, B, Al, P, Pb, des métaux de transition, des lanthanides, et des actinides et/ou de pré-condensats dérivés des combinaisons ci-dessus citées, le cas échéant en présence d'un catalyseur et/ou d'un solvant, par action d'eau ou d'humidité, et on soumet les particules résultantes à une modification de surface en condensant dessus une ou plusieurs combinaisons organiquement modifiées et hydrolytiquement condensables des éléments Sn, Si, B, Al, P, Pb, des métaux de transition, des lanthanides et des actinides, et/ou des pré-condensats dérivés des combinaisons ci-dessus citées, le cas échéant en présence d'un catalyseur et/ou d'un solvant par action d'eau ou d'humidité sur la surface des particules.

**14.** Procédé de fabrication de particules sphériques selon au moins l'une des revendications 1 à 11,
**caractérisé en ce qu'**
au moins l'élément Sn comme oxyde (hydrate) précipitable est contenu sous forme dissoute ou sous forme d'un sol en phase aqueuse, et émulsionné avec utilisation d'un émulsionnant dans un solvant organique et que l'on précipite l'hydrate de $SnO_2$ ou un autre oxyde (hydrate) dans les gouttelettes d'eau émulsionnées par dissolution d'au moins une parmi des combinaisons ammonium, phosphonium et autres onium quaternaires et des sels d'acides organiques à longues chaînes de combinaisons choisies, avant, pendant ou après la formation de l'émulsion, la combinaison concernée soit existant déjà sous la forme OH ou H, soit se trouvant formée in situ, après quoi l'eau est éliminée par distillation, et on soumet les particules résultantes à une modification de surface, en condensant sur la surface des particules une ou plusieurs combinaisons organiquement modifiées et hydrolytiquement condensables des éléments Sn, Si, B, Al, P, Pb, des éléments de transition, des lanthanides et des actinides et/ou des pré-condensats dérivés des combinaisons ci-dessus citées, le cas échéant en présence d'un catalyseur et/ou d'un solvant par action d'eau ou d'humidité.

**15.** Procédé selon au moins l'une des revendications 12 à 14,
**caractérisé en ce qu'**
une ou plusieurs des combinaisons métalliques hydrolytiquement condensées de la modification dérivent de monomères répondant à la formule générale I,

$$R_a\ (Z'R'')_b MX_{c-(a+b)} \qquad (I)$$

dans laquelle les restes et indices sont identiques ou différents et sont définis comme dans la revendication 3.

**16.** Procédé selon au moins l'une des revendications 12 à 14,
**caractérisé en ce qu'**
une ou plusieurs des combinaisons de Sn hydrolytiquement condensées de la modification de surface dérivent de monomères répondant à la formule générale II,

$$R_a\ (Z'R'')_b SnX_{c-(a+b)} \qquad (II)$$

dans laquelle les restes et indices sont identiques ou différents et sont définis comme dans la revendication 4.

**17.** Procédé selon au moins l'une des revendications 12 à 14,
**caractérisé en ce qu'**

une ou plusieurs des combinaisons de Si hydrolytiquement condensées de la modification de surface dérivent de monomères répondant à la formule générale III,

$$R_a\ (Z'R'')\ _bSiX_{c-\ (a+b)} \qquad \text{(III)}$$

dans laquelle les restes et indices sont identiques ou différents et sont définis comme dans la revendication 5.

**18.** Procédé selon au moins l'une des revendications 12 à 14,
**caractérisé en ce qu'**
une ou plusieurs des combinaisons de Si hydrolytiquement condensées de la modification de surface dérivent de monomères répondant à la formule générale IV,

$$(X_aR_bSi\ (R'A)\ _c)\ _{(4-a-b)\ x}\ B \qquad \text{(IV)}$$

dans laquelle les restes et indices sont identiques ou différents et sont définis comme dans la revendication 6.

**19.** Procédé selon au moins l'une des revendications 12 à 18,
**caractérisé en ce qu'**
une ou plusieurs des combinaisons de Si hydrolytiquement condensées de la modification de surface dérivent de monomères répondant à la formule générale V.

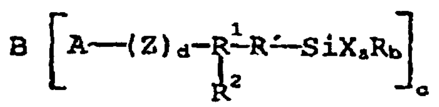

(V)

dans laquelle les restes et indices sont identiques ou différents et sont définis comme dans la revendication 7.

**20.** Procédé selon au moins l'une des revendications 12 à 19,
**caractérisé en ce qu'**
une ou plusieurs des combinaisons de Si hydrolytiquement condensées de la modification de surface dérivent de monomères répondant à la formule générale VI,

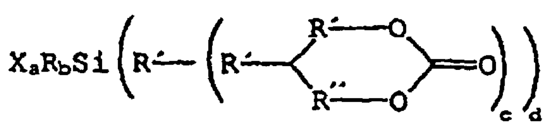

(VI)

dans laquelle les restes et indices sont identiques ou différents et sont définis comme dans la revendication 8.

**21.** Procédé selon au moins l'une des revendications 12 à 20,
**caractérisé en ce qu'**
une ou plusieurs des combinaisons hydrolytiquement condensées de la modification de surface dérivent de monomères répondant à la formule générale VII,

$$Y_nSiX_mR_{4-\ (n+m)} \qquad \text{(VII)}$$

dans laquelle les restes X, Y et R sont identiques ou différents et sont définis comme dans la revendication 9.

**22.** Procédé selon au moins l'une des revendications 12 à 21,

**caractérisé en ce qu'**
une ou plusieurs des combinaisons de Si hydrolytiquement condensées de la modification de surface dérivent de monomères répondant à la formule générale VIII,

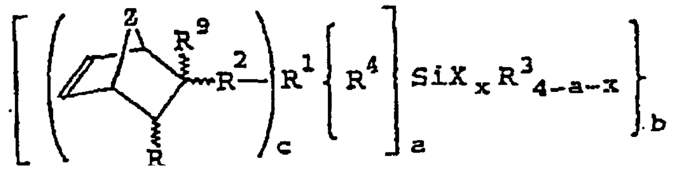

(VIII)

dans laquelle les restes et indices sont identiques ou différents et sont définis comme dans la revendication 10.

**23.** Utilisation des particules sphériques selon une ou plusieurs des revendications 1 à 11 pour des matériaux en vrac, des revêtements, des feuilles, des dépôts électrophorétiques, pour des composants optiques, électro-optiques ou opto-électroniques, en chromatographie, en catalyse, dans le domaine médical, spécialement, par exemple, comme matière de remplissage opaque aux rayons X, dans le secteur dentaire,
ou comme support pour matériaux pharmacologiques.

**24.** Utilisation selon la revendication 23,
**caractérisée en ce que**
la proportion de matière de remplissage par rapport à la quantité totale représente de 30 à 98 % en poids, de préférence 50 à 90 % en poids.